# EUROPEAN PATENT APPLICATION

(11) **EP 4 804 592 A1**
(43) Date of publication of application: **09.09.2026**
(21) Application number: 24890755.2
(22) Date of filing: 14.11.2024
(51) Int. Cl.: H04W 24/02

(54) **COMMUNICATION METHOD AND APPARATUS**

(30) Priority: 14.11.2023 CN 202311522043
(71) Applicant: Huawei Technologies Co., Ltd., Shenzhen, Guangdong 518129 (CN)
(72) Inventor: SENG, Shuming, Shenzhen, Guangdong 518129 (CN); LI, Chenwan, Shenzhen, Guangdong 518129 (CN); WU, Yiling, Shenzhen, Guangdong 518129 (CN)
(74) Representative: Goddar, Heinz J.
(86) International application number: PCT/CN2024/131975
(87) International publication number: WO 2025/103400

(57) **Abstract**

A communication method and apparatus are provided. The method includes: A terminal device sends first information to a network device or receives second information from the network device, and starts a first timer; and when determining that the first timer expires and that no third information is received from the network device, the terminal device performs one or more of the following: disconnecting, at an AS, from the network device; or entering a first state. When in the first state, the terminal device responds only to a paging message or a downlink trigger message, where the downlink trigger message includes a query message or a select message. Compared with a manner in which a transmission terminal device determines link quality based on measurement of a reference signal received power, that the terminal device determines, based on the first timer, whether a link is abnormal is simpler, thereby reducing processing complexity.

## Description

### CROSS-REFERENCE TO RELATED APPLICATIONS

This application claims priority to Chinese Patent Application No. 202311522043.1, filed with the China National Intellectual Property Administration on November 14, 2023 and entitled "COMMUNICATION METHOD AND APPARATUS", which is incorporated herein by reference in its entirety.

### TECHNICAL FIELD

Embodiments of this application relate to the field of internet of things technologies, and in particular, to a communication method and apparatus.

### BACKGROUND

In a communication process, it is inevitable that radio link quality is poor, which causes interruption of data transmission or a high error rate in data parsing. Therefore, a communication device needs to detect link quality. For example, a terminal device may detect quality of a link between the terminal device and an access network device. In a radio link monitoring (radio link monitoring, RLM) mechanism of a conventional terminal device, link quality is determined based on measurement of a reference signal received power on a reference signal resource. For some terminal devices with low processing complexity such as an internet of things (internet of things, IoT) terminal device, the RLM mechanism of the conventional terminal device cannot be used, or the RLM mechanism of the conventional terminal device is complex for the IoT terminal device. For the IoT terminal device, there is no corresponding RLM solution. As a result, when a link is abnormal, the IoT terminal device still continues service transmission by default, or the IoT terminal device performs invalid service transmission, wasting a system resource.

### SUMMARY

This application provides a communication method and apparatus, to simplify a procedure in which a terminal device detects whether a link is abnormal, reduce processing complexity, and improve system resource utilization.

To achieve the foregoing objective, the following technical solutions are used in embodiments of this application.

According to a first aspect, an embodiment of this application provides a communication method, which may be performed by a first communication apparatus. The first communication apparatus may be a terminal device, or the first communication apparatus is a component configured to implement a function of a terminal device. For example, the first communication apparatus is a unit/module, a circuit, a chip, or the like in the terminal device. The following describes the method provided in the first aspect by using an example in which the first communication apparatus is the terminal device.

The communication method includes: A terminal device sends first information to a network device or receives second information from the network device, and starts a first timer; and when determining that the first timer expires and that no third information is received from the network device, the terminal device performs one or more of the following: disconnecting, at an access stratum (access stratum, AS), from the network device; or entering a first state. When in the first state, the terminal device responds only to a paging message or a downlink trigger message, where the downlink trigger message includes a query message or a select message.

In the method, the terminal device determines, based on the first timer, whether a link is abnormal. If the terminal device starts the first timer after sending the first information or receiving the second information, and does not receive the third information within a timing duration of the first timer, the terminal device determines that link quality is poor and the link is abnormal. Compared with a manner in which a transmission terminal device determines link quality based on measurement of a block error rate (block error rate, BLER) or a received power of a reference signal, the method is simpler, thereby reducing processing complexity.

In an implementation, the method further includes: The terminal device sends a first message to the network device, where the first message indicates that a link of the terminal device is abnormal. The network device is notified, by using the first message, that the link of the terminal device is abnormal, so that the network device can be assisted in using an appropriate policy to end a transmission procedure of the terminal device or stop a service procedure of the terminal device. For example, even if the network device still has other data to be transmitted, when the network device learns that the link of the terminal device is abnormal, the network device no longer sends the to-be-transmitted data.

In an implementation, the method further includes: keeping a flag unchanged, where the flag identifies an access state of the terminal device. When current link quality is poor, the terminal may stop a current data transmission procedure, and listen to a paging or downlink trigger message again, to reduce unnecessary data transmission. Keeping the flag unchanged (assuming that the flag is A) may be understood as that the terminal device does not successfully perform data transmission, or may be understood that, for the terminal device, a current service is not ended, and the terminal device needs to continue to listen to a paging or downlink trigger message carrying the same flag A, or resend an access request/a connection establishment request. If the flag is flipped (A is flipped to B), it indicates that the terminal device successfully performs data transmission or has completed the current service, and the terminal device does not respond to the paging or downlink trigger message carrying the flag A.

In an implementation, the method further includes: The terminal device receives first indication information, where the first indication information is used to determine the timing duration of the first timer. Configuring the first timer by using the first indication information is flexible. In addition, an appropriate first timer may be configured for the terminal device. For example, if a service processing delay is long, a timing duration of the first timer is also long; or if a service processing delay is short, a timing duration of the first timer is also short. According to the method, sufficient time can be reserved for the terminal device to determine whether a link is abnormal, thereby reducing misjudgment; and unnecessary waiting time for the terminal device can be reduced, so that next transmission can be performed in a timely manner, thereby improving transmission efficiency.

In an implementation, the first indication information indicates first time information, and the first time information indicates the timing duration of the first timer; or the first indication information indicates that the timing duration of the first timer is determined based on a timing duration of a second timer, and the second timer is used for random access.

A network side may configure the first time information used to determine the timing duration of the first timer, or may configure reuse of an existing timer, for example, the second timer, which is flexible.

In an implementation, that the first indication information indicates the first time information includes: The first indication information includes the first time information, which is direct and reduces processing complexity of the terminal device.

In an implementation, that the first indication information indicates the first time information includes: The first indication information includes an index of the first time information, which can reduce bit overheads of the first indication information.

In an implementation, that the first indication information indicates the first time information includes: The first indication information includes identifier information of a first service, where the first service is associated with the first time information. In this solution, the bit overheads of the first indication information can be reduced, and the first timer can be configured based on a granularity of a service, so that the first timer matches the service. This reduces misjudgment about whether a link is abnormal, and reduces unnecessary waiting time for the terminal device, thereby improving overall system transmission efficiency.

In an implementation, the first indication information is carried in the paging message. The method further includes: The terminal device receives second indication information, where the second indication information indicates second time information, the second time information is used to determine the timing duration of the first timer, the second indication information is carried in an acknowledgment message, and the acknowledgment message indicates the terminal device to send data, or is used to confirm that the terminal device successfully sends data.

The network side may configure a timer by using two different pieces of signaling. The terminal device may select a configuration of a specific piece of signaling to determine the timing duration of the first timer. For example, if the first indication information is carried in the paging message, and the second indication information is carried in the acknowledgment message, the timing duration of the first timer is determined based on the second time information.

In an implementation, that the second indication information indicates the second time information includes: The second indication information includes the second time information, which is direct and reduces processing complexity of the terminal device.

In an implementation, that the second indication information indicates the second time information includes: The second indication information includes an index of the second time information, which can reduce bit overheads of the first indication information.

In an implementation, that the second indication information indicates the second time information includes: The second indication information includes identifier information of a second service, where the second service is associated with the second time information. In this solution, the bit overheads of the second indication information can be reduced, and misjudgment about whether a link is abnormal can be reduced, thereby improving overall system transmission efficiency.

According to a second aspect, an embodiment of this application provides a communication method, which may be performed by a second communication apparatus. The second communication apparatus may be an access network device, or the second communication apparatus is a component configured to implement a function of an access network device. For example, the second communication apparatus is a unit/module, a circuit, a chip, or the like in the access network device. The following describes the method provided in the second aspect by using an example in which the second communication apparatus is the access network device.

The communication method includes: An access network device determines first indication information, and sends the first indication information to a terminal device. The first indication information is used to determine a timing duration of a first timer, and the first timer is used by the terminal device to determine whether a link is abnormal.

In an implementation, the first indication information indicates first time information, and the first time information indicates the timing duration of the first timer; or the first indication information indicates that the timing duration of the first timer is determined based on a timing duration of a second timer, and the second timer is used for random access.

In an implementation, that the first indication information indicates the first time information includes: The first indication information includes the first time information; the first indication information includes an index of the first time information; or the first indication information includes identifier information of a first service, where the first service is associated with the first time information.

In an implementation, the method further includes: The access network device sends second indication information to the terminal device, where the second indication information indicates second time information, and the second time information is used to determine the timing duration of the first timer. The second indication information is carried in an acknowledgment message, and the acknowledgment message indicates the terminal device to send data, or is used to confirm that the terminal device successfully sends data.

In an implementation, that the second indication information indicates the second time information includes:
The second indication information includes the second time information;
the second indication information includes an index of the second time information; or
the second indication information includes identifier information of a second service, where the second service is associated with the second time information.

In an implementation, the method further includes: The access network device sends fourth information to a core network element, and starts a third timer; and when determining that the third timer expires and that no response to the fourth information is received, the access network device performs one or more of the following: releasing an AS of the terminal device; or sending a second message to the terminal device, where the second message is used to trigger a next access time resource.

In an implementation, the method further includes: The access network device receives third indication information from the core network element, where the third indication information is used to determine a timing duration of the third timer and/or the timing duration of the first timer.

In an implementation, the third indication information indicates third time information, and the third time information is used to determine the timing duration of the third timer and/or the timing duration of the first timer.

In an implementation, the method further includes: The access network device sends a third message to the terminal device, where the third message indicates that the link is abnormal.

In an implementation, the method further includes: The access network device sends a fourth message to the core network element, where the fourth message indicates that the terminal device is released.

For beneficial effects of the second aspect and the implementations of the second aspect, refer to beneficial effects of the first aspect and the implementations of the first aspect. Details are not described herein again.

According to a third aspect, an embodiment of this application provides a communication method, which may be performed by a second communication apparatus. The second communication apparatus may be an access network device, or the second communication apparatus is a component configured to implement a function of an access network device. For example, the second communication apparatus is a unit/module, a circuit, a chip, or the like in the access network device. The following describes the method provided in the third aspect by using an example in which the second communication apparatus is the access network device.

The communication method includes: The access network device sends fourth information to a core network element, and starts a third timer; and when determining that the third timer expires and that no response to the fourth information is received, the access network device performs one or more of the following: releasing an AS of a terminal device; or sending a second message to a terminal device, where the second message is used to trigger a next access time resource.

In an implementation, the method further includes: The access network device receives third indication information from the core network element, where the third indication information is used to determine a timing duration of the third timer and/or a timing duration of a first timer, and the first timer is used by the terminal device to determine whether a link is abnormal.

In an implementation, the method further includes: The access network device sends a third message to the terminal device, where the third message indicates that the link is abnormal.

In an implementation, the method further includes: The access network device sends a fourth message to the core network element, where the fourth message indicates that the terminal device is released.

For beneficial effects of the third aspect and the implementations of the third aspect, refer to beneficial effects of the first aspect or the second aspect and the implementations of the first aspect or the second aspect. Details are not described herein again.

According to a fourth aspect, an embodiment of this application provides a communication method, which may be performed by a third communication apparatus. The third communication apparatus may be a core network element, or the third communication apparatus is a component configured to implement a function of a core network element. For example, the third communication apparatus is a unit/module, a circuit, a chip, or the like in the core network element. The following describes the method provided in the fourth aspect by using an example in which the third communication apparatus is the core network element.

The communication method includes: The core network element determines third indication information, and sends the third indication information to an access network device. The third indication information is used to determine a timing duration of a third timer, and/or is used to determine a timing duration of a first timer. The first timer is used by a terminal device to determine whether a link is abnormal. The third timer is used by the access network device to determine whether to release the terminal device.

In an implementation, the third indication information indicates third time information, and the third time information is used to determine the timing duration of the third timer and/or the timing duration of the first timer.

In an implementation, the method further includes: The core network element receives a fourth message from the access network device, where the fourth message indicates that the terminal device is released.

For beneficial effects of the fourth aspect and the implementations of the fourth aspect, refer to beneficial effects of the first aspect or the second aspect and the implementations of the first aspect or the second aspect. Details are not described herein again.

According to a fifth aspect, an embodiment of this application provides a communication method, which may be performed by a first communication apparatus, a second communication apparatus, and a third communication apparatus. The first communication apparatus may be a terminal device, or the first communication apparatus is a component configured to implement a function of a terminal device. For example, the first communication apparatus is a unit/module, a circuit, a chip, or the like in the terminal device. The second communication apparatus may be an access network device, or the second communication apparatus is a component configured to implement a function of an access network device. For example, the second communication apparatus is a unit/module, a circuit, a chip, or the like in the access network device. The third communication apparatus may be a core network element, or the third communication apparatus is a component configured to implement a function of a core network element. For example, the third communication apparatus is a unit/module, a circuit, a chip, or the like in the core network element. The first communication apparatus has a function of implementing behavior in the method example according to the first aspect. The second communication apparatus has a function of implementing behavior in the method example according to the second aspect or the third aspect. The third communication apparatus has a function of implementing behavior in the method example according to the fourth aspect.

An example in which the first communication apparatus is the terminal device, the second communication apparatus is the access network device, and the third communication apparatus is the core network element is used. The communication method includes: The core network element sends third indication information to the access network device, where the third indication information is used by the access network device to determine a timing duration of a first timer; the access network device sends first indication information to the terminal device, where the first indication information is used by the terminal device to determine the timing duration of the first timer; the terminal device sends first information to a network device or receives second information from the network device, and starts the first timer; and when determining that the first timer expires and that no third information is received from the network device, the terminal device performs one or more of the following: disconnecting, at an access stratum (access stratum, AS), from the network device; or entering a first state. When in the first state, the terminal device responds only to a paging message or a downlink trigger message, where the downlink trigger message includes a query message or a select message. The network device includes an access network device and/or a core network element.

For beneficial effects of the fifth aspect, refer to beneficial effects of the first aspect or the second aspect and the implementations of the first aspect or the second aspect. Details are not described herein again.

According to a sixth aspect, an embodiment of this application provides a communication apparatus. The communication apparatus has a function of implementing behavior in the method example according to the first aspect to the fourth aspect. For beneficial effects, refer to related descriptions of the first aspect to the fourth aspect. Details are not described herein again. For example, the communication apparatus may be the terminal device in the first aspect, or the communication apparatus may be the access network device in the second aspect or the third aspect, or the communication apparatus may be the core network element in the fourth aspect. For another example, the communication apparatus may be an apparatus that can support a terminal device in implementing a function required by the method provided in the first aspect. For example, the communication apparatus may be a chip or a chip system in the terminal device. Alternatively, for another example, the communication apparatus may be an apparatus that can support an access network device in implementing a function required by the method provided in the second aspect or the third aspect. For example, the communication apparatus may be a chip or a chip system in the access network device. Alternatively, for another example, the communication apparatus may be an apparatus that can support a core network element in implementing a function required by the method provided in the fourth aspect. For example, the communication apparatus may be a chip or a chip system in the core network element.

In a possible design, the communication apparatus includes a baseband apparatus and a radio frequency apparatus.

In a possible design, the communication apparatus includes a corresponding means (means) or module configured to perform the method according to any one of the first aspect to the fourth aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method example according to any one of the first aspect to the fourth aspect. For details, refer to detailed descriptions in the method example. Details are not described herein.

According to a seventh aspect, an embodiment of this application provides a communication apparatus. The communication apparatus may be the communication apparatus in the sixth aspect in the foregoing embodiment, or may be a chip or a chip system disposed in the communication apparatus in the sixth aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is caused to perform the method performed by the first terminal device in the foregoing method embodiments. For example, the communication apparatus may be a terminal device or a functional module in the terminal device, for example, a baseband chip and a radio frequency chip. Alternatively, when the processor reads the computer program, the instructions, or the data, the communication apparatus is caused to perform the method performed by the access network device in the foregoing method embodiments. For example, the communication apparatus may be an access network device or a functional module in the access network device, for example, a baseband chip and a radio frequency chip. Alternatively, when the processor reads the computer program, the instructions, or the data, the communication apparatus is caused to perform the method performed by the core network element in the foregoing method embodiments. For example, the communication apparatus may be a core network element or a functional module in the core network element, for example, a chip system.

According to an eighth aspect, an embodiment of this application provides a chip system. The chip system includes a processor, may further include a communication interface, and is configured to implement the method according to any one of the first aspect to the fourth aspect. Optionally, the chip system further includes a memory. The memory is configured to store a computer program (which may also be referred to as code or instructions). The processor is configured to: invoke the computer program from the memory, and run the computer program, to cause a device on which the chip system is installed to perform the method according to any one of the first aspect and the possible implementations of the first aspect, to cause a device on which the chip system is installed to perform the method according to any one of the second aspect and the possible implementations of the second aspect, to cause a device on which the chip system is installed to perform the method according to any one of the third aspect and the possible implementations of the third aspect, or to cause a device on which the chip system is installed to perform the method according to any one of the fourth aspect and the possible implementations of the fourth aspect. The chip system may include a chip, or may include a chip and another discrete device.

According to a ninth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect to the fourth aspect.

In a specific implementation process, the communication apparatus may be a chip, the input circuit may be an input pin, the output circuit may be an output pin, and the logic circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal device, for example, a mobile phone. The interface circuit may be a radio frequency processing chip in the wireless communication device, and a processing circuit may be a baseband processing chip in the wireless communication device.

According to a tenth aspect, an embodiment of this application provides a communication system. The communication system includes a terminal device, an access network device, and a core network element.

The core network element is configured to send third indication information to the access network device, where the third indication information is used by the access network device to determine a timing duration of a first timer.

The access network device is configured to send first indication information to the terminal device, where the first indication information is used by the terminal device to determine the timing duration of the first timer.

The terminal device is configured to: send first information to a network device or receive second information from the network device, and start the first timer; and when determining that the first timer expires and that no third information is received from the network device, perform one or more of the following: disconnecting, at an AS, from the network device; or entering a first state. When in the first state, the terminal device responds only to a paging message or a downlink trigger message, where the downlink trigger message includes a query message or a select message. The network device includes an access network device and/or a core network element.

The terminal device is configured to implement a function of the method in the first aspect, the access network device is configured to implement a function of the method in the second aspect, and the core network element is configured to implement a function of the method in the fourth aspect. Alternatively, the terminal device is configured to implement a function of the method in the first aspect, the access network device is configured to implement a function of the method in the second aspect and the third aspect, and the core network element is configured to implement a function of the method in the fourth aspect.

According to an eleventh aspect, an embodiment of this application provides a computer-readable storage medium. The computer-readable storage medium is configured to store a computer program or instructions. When the computer program or the instructions are run, the method according to any one of the first aspect and the possible implementations of the first aspect is implemented, the method according to any one of the second aspect and the possible implementations of the second aspect is implemented, the method according to any one of the third aspect and the possible implementations of the third aspect is implemented, or the method according to any one of the fourth aspect and the possible implementations of the fourth aspect is implemented.

According to a twelfth aspect, an embodiment of this application further provides a computer program product including instructions. When the computer program product runs on a computer, the method according to any one of the first aspect and the possible implementations of the first aspect is implemented, the method according to any one of the second aspect and the possible implementations of the second aspect is implemented, the method according to any one of the third aspect and the possible implementations of the third aspect is implemented, or the method according to any one of the fourth aspect and the possible implementations of the fourth aspect is implemented.

For beneficial effects of the sixth aspect to the twelfth aspect and the implementations of the sixth aspect to the twelfth aspect, refer to descriptions of beneficial effects of any one of the first aspect to the fourth aspect and the possible implementations of the first aspect to the fourth aspect.

### BRIEF DESCRIPTION OF DRAWINGS

FIG. 1 is a diagram of a communication system to which an embodiment of this application is applicable;
FIG. 2 is a diagram of a communication system in which a reader and a writer are separated in FIG. 1;
FIG. 3 is a schematic flowchart of service interaction between a tag and a network device according to an embodiment of this application;
FIG. 4 is another schematic flowchart of service interaction between a tag and a network device according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a diagram of a structure of a communication apparatus according to an embodiment of this application; and
FIG. 9 is a diagram of another structure of a communication apparatus according to an embodiment of this application.

### DESCRIPTION OF EMBODIMENTS

The technical solutions provided in embodiments of this application may be applied to an internet of things (internet of things, IoT) system. The IoT includes an ambient internet of things (ambient IoT, A-IoT), a narrowband internet of things (narrowband internet of things, NB-IoT), and the like. An IoT technology is widely applied to various industry fields. For example, the IoT technology may be applied to scenarios such as logistics, warehousing, industrial manufacturing, identity identification, or environment monitoring. The IoT is implemented based on a radio frequency identification (radio frequency identification, RFID) technology. The RFID technology is a non-contact communication technology implemented by using a radio frequency communication manner. A principle of the RFID technology is that a reader-writer/reader (reader) and a tag (tag) do not need to contact each other, and data communication is implemented by using radio waves. The IoT technology may be applied to a communication system related to the 3rd generation partnership project (the 3rd generation partnership project, 3GPP), for example, a long term evolution (long term evolution, LTE) communication system or the fifth generation (the sixth generation, 5G) mobile communication system, or may be applied to another next-generation mobile communication system, for example, the sixth generation (6G) communication system, or another similar communication system. The another similar communication system may include wireless fidelity (wireless fidelity, Wi-Fi), vehicle to everything (vehicle to everything, V2X), and the like.

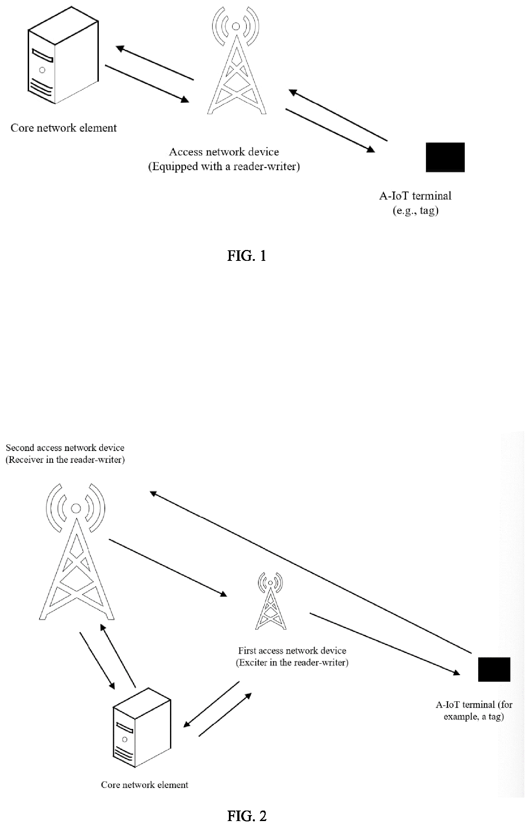

FIG. 1 is a diagram of a communication system according to an embodiment of this application. In FIG. 1, an example in which the communication system includes one terminal device, one access network device, and one core network element is used. The network architecture shown in FIG. 1 is merely an example. There may be fewer or more terminal devices, access network devices, and core network elements. The communication system described in embodiments of this application is intended to describe the technical solutions in embodiments of this application more clearly, but constitutes no limitation on the communication system to which embodiments of this application are applicable. A person of ordinary skill in the art may know that, with evolution of the network architecture, the technical solutions provided in embodiments of this application are also applicable to a similar technical problem. When the technical solutions in embodiments of this application are applied to another communication system, devices, components, modules, and the like in embodiments may be replaced with corresponding devices, components, and modules in the another communication system. This is not limited. A network device mentioned in embodiments of this application includes an access network device and/or a core network element.

Any device that can perform data communication with the access network device may be considered as a terminal device. The terminal device is also referred to as a terminal, a terminal apparatus, user equipment (user equipment, UE), a mobile station, a mobile terminal, or the like. For example, the terminal device may be a mobile phone, a computer, a mobile internet device (mobile internet device, MID), a wearable device, a virtual reality (virtual reality, VR) device, an augmented reality (augmented reality, AR) device, a robot arm, a camera, a robot, a smart home device (for example, a television, an air conditioner, a robot vacuum cleaner, a sound box, or a set-top box), a relay (relay), customer-premises equipment (customer-premises equipment, CPE), or a device having a function of a tag. For example, the terminal device may be a tag or the like in an IoT/A-IoT. In FIG. 1, an example in which the terminal device is an A-IoT terminal is used.

The tag may be referred to as an RFID tag or an electronic tag, or may be referred to as an A-IoT terminal or an A-IoT device, and is usually attached to an object to identify a target object. The tag may receive a radio frequency signal from a reader-writer. With energy obtained from an induced current, the tag may send information stored in a chip inside the tag, or the tag may actively send a signal at a specific frequency to the reader-writer. The reader-writer reads the information from the tag. A design of the tag is simple. Application layer signaling and air interface signaling are designed in an integrated manner, featuring low power consumption. Tags are classified into three types: an active tag, a passive tag, and a semi-active/semi-passive tag. The active tag is also referred to as an active tag (active tag), the passive tag is also referred to as a passive tag (passive tag), and the semi-active/semi-passive tag is also referred to as a semi-passive tag (semi-passive tag). The active tag/active tag is equipped with a power supply, and uses a communication manner of actively generating a carrier, that is, may actively send a signal to the reader-writer, without a need to obtain, based on a received signal, energy for sending the signal. The passive tag/passive tag is not equipped with a module such as a power supply, or the power supply module has a low power level. The passive tag may use a backscatter (backscatter)-based communication manner, so that energy can be obtained from an environment, and a signal can be sent by using the energy. The passive tag may operate in a backscatter communication scenario. For example, the passive tag obtains energy by backscattering a signal from the reader-writer to transmit data. The semi-active/semi-passive tag integrates advantages of the active tag and the passive tag, and may be used as a special marker. Usually, the semi-active/semi-passive tag is in a sleep state, may not operate, and does not send a signal to the outside. The semi-active/semi-passive tag is activated and starts to operate only when entering an activation signal range of a low-frequency activator. The tag in embodiments of this application may be an active tag, a passive tag, a semi-active/semi-passive tag, or the like.

In embodiments of this application, the tag may be used as a terminal device. Correspondingly, the terminal device in this application may be of the following three types: a passive terminal, which has no energy storage, cannot independently generate a signal, and transmits a signal through backscattering; a semi-passive terminal, which has energy storage, but cannot independently generate a signal, and transmits a signal through backscattering, where energy stored by the semi-passive terminal can amplify a backscattered signal; and an active terminal, which has energy storage, can independently generate a signal, and has an active radio frequency element for transmission.

Both a tag device and the reader-writer may be implemented based on an infrastructure in a cellular network, or the tag device and the reader-writer may be devices in the cellular network. For example, a function of the reader-writer may be implemented by a network device or a terminal device, and the tag device may be implemented by a terminal device in the cellular network. For example, the tag device may be an internet of things terminal with extremely low power consumption and extremely low complexity. When the terminal device has a function of the tag device, non-contact data communication may be performed between the terminal device and a network device or another terminal device.

If the various terminal devices described above are located on a vehicle (for example, placed/mounted in the vehicle), the terminal devices may be all considered as vehicle-mounted terminal devices. The vehicle-mounted terminal device may be a vehicle-mounted module, a vehicle-mounted assembly, a vehicle-mounted component, a vehicle-mounted chip, or a vehicle-mounted unit that is built in the vehicle as one or more components or units. The vehicle-mounted terminal device may alternatively be an entire vehicle device, a vehicle-mounted module, a vehicle, an on-board unit (on-board unit, OBU), a roadside unit (roadside unit, RSU), an in-vehicle infotainment system (or referred to as an in-vehicle sending unit) (telematics box, T-box), a chip, a system on chip (system on chip, SoC), or the like. The chip or the SoC may be mounted in the vehicle, the OBU, the RSU, or the T-box.

In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device. A specific technology and a specific device form that are used for the terminal device are not limited in embodiments of this application. For example, in embodiments of this application, the terminal device may be in a form of tag, or may be in a form of another terminal. Unless otherwise specified, the terminal device and the tag may be interchangeable.

The access network device is also referred to as a radio access network (radio access network, RAN) device. A RAN may be a 3GPP-related cellular system, for example, an LTE system, a new radio (new radio, NR) system, or a future-oriented evolved system (for example, a 6G mobile communication system). The RAN may alternatively be an open radio access network (open RAN, O-RAN or ORAN), a cloud radio access network (cloud radio access network, CRAN), a virtualized radio access network (virtualized RAN, vRAN), or the like. The RAN may alternatively be a communication system that integrates two or more of the foregoing systems. The RAN device may also be referred to as a RAN node, a RAN entity, an access node, or the like. For example, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, or the like. The RAN node may be an RSU in a V2X technology, an access node in a Wi-Fi system, or the like.

The RAN node may alternatively be a module or unit that completes some functions of the base station. Alternatively, a plurality of RAN nodes cooperate to assist the terminal device in implementing radio access, and different RAN nodes each implement some functions of the base station. For example, the RAN node may be a central unit (central unit, CU), a distributed unit (distributed unit, DU), or a radio unit (radio unit, RU). In different systems, the CU, the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. The CU and the DU may be configured based on protocol layer functions of a wireless network that are implemented by the CU and the DU. Protocol layers separately configured for the CU and the DU are not limited in embodiments of this application. Any one of the CU, the DU, and the RU in this application may be implemented by using a software module, a hardware module, or a combination of a software module and a hardware module.

In embodiments of this application, the reader-writer may be built in the access network device. When the terminal device is a tag, the tag may communicate with the access network device through a Uu interface, as shown in FIG. 1. Functions of the reader-writer may be further separated. The reader-writer is divided into a receiver (receiver) and an exciter (helper). The receiver is also referred to as a receiving end or a receiving unit, and the exciter is also referred to as an excitation end or an excitation unit. The excitation unit is equivalent to a transmitter in the reader-writer, and the receiving unit is equivalent to a receiver in the reader-writer. When the reader-writer is implemented in a separated architecture, different entities of the reader-writer may be deployed on different access network devices, as shown in FIG. 2. In FIG. 2, the exciter is deployed on a first access network device, and is configured to perform a sending function of the reader-writer; and the receiver is deployed on a second access network device, and is configured to perform a receiving function of the reader-writer. Transmission may be performed between the exciter and the reader-writer/access network device through an air interface, or may be performed in a wired connection manner.

In embodiments of this application, an apparatus configured to implement a function of the access network device may be the access network device, or may be an apparatus that can support the access network device in implementing the function, for example, a chip system or a combined device or component that can implement the function of the access network device. The apparatus may be installed in the access network device. A specific technology and a specific device form that are used for the access network device are not limited in embodiments of this application.

The core network element corresponds to different devices in different systems. For example, in a 4G system, the core network element may be a mobility management entity (mobility management entity, MME) and/or a serving gateway (serving gateway, S-GW). In a 5G system, the core network element may be an access and mobility management function (access and mobility management function, AMF), a session management function (session management function, SMF), or a user plane function (user plane function, UPF). In embodiments of this application, the core network element has a tag management function, and the core network element may alternatively be a tag management function (Tag management function, TMF) or an enhanced AMF. The enhanced AMF has the tag management function.

The tag may be used in a plurality of industry fields. As a typical application, logistics management is implemented by inventorying physical tags. Tag inventory requires tags to access a network. After randomly accessing the network, each tag may report an identifier of the tag to a reader, so that the reader can determine presence of tags in a coverage area. After accessing the network, the tag may exchange some service information with the access network device (for example, the reader-writer) and/or the core network element. For example, the core network element may forward a message to the tag by using the access network device, where the message may include information about an operation that needs to be performed on the tag. Alternatively, the access network device may forward a message from the tag to the core network element, and the access network device may parse or process a message from the core network element or the tag. Common tag services include an inventory operation, a read (Read) operation, a write (Write) operation, a positioning (Positioning) operation, a kill (Kill) operation, a tag information obtaining operation, and the like. The inventory operation is used to obtain identifiers of all tags in a coverage area of the access network device. The read operation may read data from a tag. The write operation may write data to a tag. The positioning operation may obtain position information of a tag. The kill operation is also referred to as an invalidation operation, and may invalidate or kill an identifier of a tag. The tag information obtaining operation may obtain information about a tag, for example, an identifier of the tag, information stored in the tag, and position information of the tag. The foregoing tag services are merely examples, and a quantity and types of the tag services are not limited in embodiments of this application. For example, the tag services further include an authentication service.

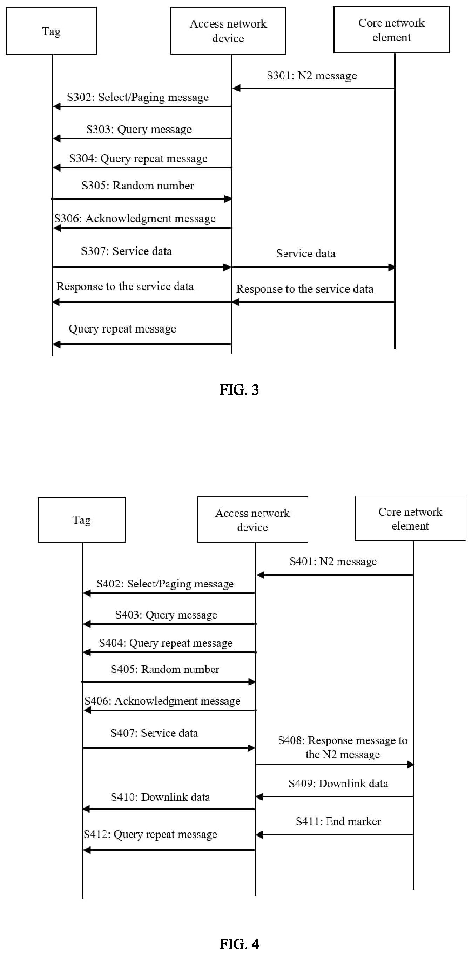

FIG. 3 is a schematic flowchart of performing a service between a tag and a network device. The network device includes an access network device and a core network element. The access network device has a function of a reader-writer. The procedure includes the following steps.

S301: The core network element sends an N2 message to the access network device.

N2 is a communication interface between the core network element and the access network device. The N2 message may be used to request an operation on one or more tags.

S302: The access network device broadcasts a select (select) message or a paging (paging) message.

The select/paging message includes an identifier range of a tag on which an operation is to be performed. The identifier range of the tag includes an identifier of the tag.

S303: The access network device sends a query (query) message.

The query message may carry a Q value, and Q may determine a quantity of random access slots. The Q value is set, so that access collisions between tags can be reduced.

S304: The access network device sends a query repeat (QueryRep) message.

The access network device may send query repeat messages a plurality of times. For example, the access network device may repeatedly send 2^Q query repeat messages. S304 shows only one query repeat message. A subsequent query repeat message may be sent after S306 or S307.

S305: The tag sends a random number to the access network device.

When the tag determines that the identifier of the tag is in the identifier range indicated by the select message, after detecting the query message, the tag sends a random number to the access network device, to respond to the query message. The tag may generate, based on the Q value, a random number in a range of [0, 2^Q - 1]. For example, if Q is equal to 4, the tag generates a random number in a range of [0, 15]. The tag takes a quantity of random numbers as an initial value of a counter (counter). Each time the tag receives a query repeat message, the counter (counter) is decremented by 1. When the counter is 0, the tag sends a random number to initiate access.

S306: The access network device sends an acknowledgment message to the tag, where the acknowledgment message includes a random number received from the tag.

The access network device sends the acknowledgment message to the tag. If the random number included in the acknowledgment message is consistent with the random number sent from the tag to the access network device, the tag accesses the access network device.

S307: The tag sends service data to the core network element by using the access network device.

The tag accesses the access network device, and may send the service data to the core network element by using the access network device. For example, the tag sends identifier information of the tag (for example, an electronic product code (electronic product code, EPC) of the tag) to the access network device, and the access network device forwards the identifier information to the core network element.

After receiving the service data, the core network element may send a response to the service data to the access network device, and the access network device forwards the response to the service data to the tag. In FIG. 3, the access network device does not need to parse a message from the core network element and/or the tag, and is only responsible for forwarding the received message. That is, the access network device transparently transmits the service data of the tag to the core network element, where the service data is carried in a non-access stratum (non-access stratum, NAS) message.

In a possible scenario, the service data of the tag is not carried in the NAS message, but is first sent to the access network device, and the access network device sends the service data of the tag to the core network element through an N2 interface. In this scenario, a procedure of performing a service between the tag and the core network element is shown in FIG. 4. For repetitions between FIG. 4 and FIG. 3, refer to related content in FIG. 3. Details are not described herein again.

S401: The core network element sends an N2 message to the access network device.

S402: The access network device broadcasts a select (select) message or a paging (paging) message.

S403: The access network device sends a query (query) message.

S404: The access network device sends a query repeat (QueryRep) message.

S405: The tag sends a random number to the access network device.

S406: The access network device sends an acknowledgment message to the tag, where the acknowledgment message includes a random number received from the tag.

S407: The tag sends service data to the access network device.

S408: The access network device sends a response message to the N2 message to the core network element.

The response message includes the service data sent by the tag.

S409: The core network element sends downlink data to the access network device.

S410: The access network device sends, to the tag, the downlink data sent by the core network element.

S411: The core network element sends an end marker (end_marker) to the access network device.

When the service is completed, the core network element sends the end_marker to the access network device, where the end_marker carries a temporary identifier of the tag, to indicate the access network device to release the tag and the temporary identifier.

S412: The access network device sends a query repeat message to the tag.

The access network device receives the end_marker, releases the temporary identifier of the tag, and releases the tag. For example, the access network device sends a query repeat message.

In the procedure shown in FIG. 4, each time the access network device inventories a tag, the access network device sends a temporary identifier of the tag to the core network element, where the temporary identifier is used to associate the tag with an N2 interface, so that the access network device determines, based on a received N2 message, a tag corresponding to the N2 message. The temporary identifier may be a random number sent by the tag.

FIG. 3 and FIG. 4 show two procedures of interaction between the tag and the core network element. However, it is inevitable that link quality between the tag and the access network device/core network element is poor, which causes interruption of data transmission of the tag or a high error rate in data parsing. Therefore, the tag needs to detect the link quality. However, in a radio link monitoring (radio link monitoring, RLM) mechanism of UE, link quality is determined based on measurement of a BLER or a received power of a reference signal or downlink information on a reference signal resource. The downlink information includes downlink control information (downlink control information, DCI) or downlink data. Because a processing capability of the tag is weak, the RLM mechanism of the UE is not applicable to RLM of the tag, or the RLM mechanism of the UE is not applicable to a terminal device with a weak processing capability. Currently, there is no solution for a tag to detect link quality. As a result, when a link is abnormal, the tag continues to perform service transmission according to a normal service procedure, but the service transmission still fails, wasting a system resource.

To resolve the foregoing technical problem, the solutions provided in embodiments of this application are provided. In embodiments of this application, a terminal device determines, based on a timer, whether a link is abnormal. After the terminal device sends data, if the timer expires and no feedback to the data is received, the terminal device determines that link quality is poor and that the link is abnormal. A link abnormality may also be referred to as a link failure. Correspondingly, whether a link is abnormal is also referred to as whether a link fails.

In embodiments of this application, "when", "in case", and "if" mean that an apparatus performs corresponding processing in an objective situation, and are not intended to limit time. The terms do not mean that the apparatus is required to have a determining action during implementation, and do not mean any other limitation. Unless otherwise specified, "if" and "in case" are interchangeable, and "when" and "in a case of" are interchangeable. "When" and "if"/"in case" are interchangeable. In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one item (piece) of the following" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, first information and second information are two different pieces of information, not indicating a difference in content, priorities, importance, or the like of the two pieces of information. For a type of technical feature, technical features in the type of technical feature are distinguished by using "A", "B", "C", "D", and the like, and there is no sequence or order between the technical features described by "A", "B", "C", and "D". For example, an indication manner A and an indication manner B in this specification are merely used to distinguish between different timers, and do not limit priorities or importance of the indication manner A and the indication manner B.

Three timers mentioned in embodiments of this application are a first timer, a second timer, and a third timer. Both the first timer and the second timer are maximum waiting delays from sending information to receiving information by the terminal device. The first timer may be a maximum waiting delay from sending information to receiving information by the terminal device in a process in which the terminal device performs data transmission after accessing a network. The second timer may be a maximum waiting delay for sending information or receiving information by the terminal device in a random access procedure. A timing duration of the second timer may be a default value.

Alternatively, the first timer may be a maximum waiting delay between two consecutive instances of receiving information by the terminal device. For example, the first timer may be a maximum waiting delay from receiving information A to receiving next information (for example, information B) of the information A by the terminal device. The information B may be an acknowledgment/feedback message for information A, and information A may be an acknowledgment/feedback message for information sent by the terminal device.

The third timer may be a maximum waiting delay from sending, by a network device, a message/data to a core network element to receiving, by the network device, a message/data from the core network element. The message/data received by the network device from the core network element may be a feedback message for the message/data sent by the network device, or may be any message/data sent from the core network element to the network device.

Alternatively, the third timer may be a maximum waiting delay from receiving, by a network device, a message/data from a core network element to receiving, by the network device, a next message/next data from the core network element.

The technical solutions provided in embodiments of this application are described below in detail with reference to the accompanying drawings.

The following uses an example in which a communication method provided in embodiments of this application is performed by a first communication device, a second communication device, and a third communication device. A step performed by the first communication device may be implemented by a terminal device, or may be implemented by a component (for example, a module like a baseband chip, another processing unit, or a processor) in the terminal device. The terminal device may be a tag, or may be a device having a function of a tag. For example, the terminal device may be the terminal in FIG. 1, or may be a chip (system) in the terminal in FIG. 1. A step performed by the second communication device may be implemented by a RAN device, or may be implemented by a component (for example, a module like a baseband chip, another processing unit, or a processor) in the RAN device. For example, the second communication device may be the access network device in FIG. 1, or may be a chip (system) in the access network device in FIG. 1. Alternatively, the step performed by the second communication device may be implemented by another device having a wireless communication function, or may be implemented by a component (for example, a module like a baseband chip, another processing unit, or a processor) in the device. For example, the second communication device may be a terminal device or a chip (system) in the terminal device. A step performed by the third communication device may be implemented by a core network element, or may be implemented by a component (for example, a module like a chip, a processing unit, or a processor) in the core network element. For example, the core network element may be the core network element shown in FIG. 1, for example, an AMF network element, a TMF network element, or an enhanced AMF network element, or may be a chip (system) in the core network element in FIG. 1.

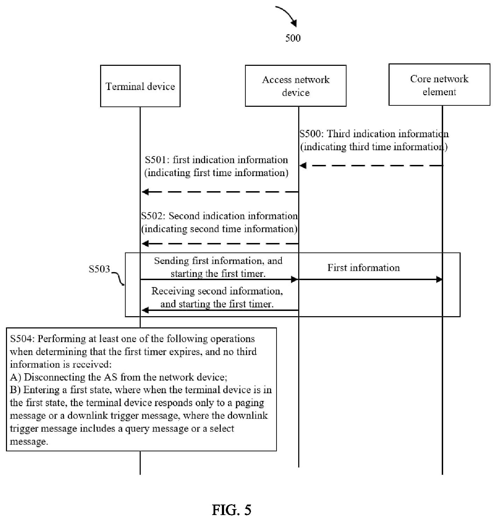

FIG. 5 is a schematic flowchart of a communication method 500 according to an embodiment of this application. In FIG. 5, an example in which a first communication device is an access network device, a second communication device is a terminal device, and a third communication device is a core network element is used to describe the method from a perspective of interaction between the access network device, the core network element, and the terminal device. It should be understood that the communication method 500 may alternatively be implemented by another apparatus, for example, a chip or a communication apparatus that has a communication function. The terminal device may be a tag or an A-IoT terminal. As shown in FIG. 5, a procedure of the communication method 500 includes the following steps.

S501: The access network device sends first indication information to the terminal device, where the first indication information is used to determine a timing duration of a first timer.

Correspondingly, the terminal device receives the first indication information. The first indication information may be used to determine the timing duration of the first timer, and the first timer may be used by the terminal device to determine whether a link is abnormal. For example, after the terminal device sends information, if the terminal device does not receive a response to the information in a period of time, it may be considered that the link is abnormal.

The first indication information may indicate first time information, and the terminal device determines the timing duration of the first timer based on the first time information. How the first indication information indicates the first time information is not limited in embodiments of this application, for example, including but not limited to the following indication manners.

Indication manner A: The first indication information includes the first time information.

For example, the first time information may be at least one duration, and the timing duration of the first timer may be one of the at least one duration. For example, the first time information may be 1 ms, 2 ms, or the like. Optionally, the first time information may be a default value. When the first time information is a plurality of durations, the terminal device may determine a maximum duration of the plurality of durations as the timing duration of the first timer, to reserve sufficient time to determine whether the link is abnormal, thereby reducing misjudgment. In the indication manner A, the terminal device may directly obtain the first time information based on the first indication information, and processing complexity is low.

Indication manner B: The first indication information includes an index of the first time information.

For example, the first time information is at least one duration, and the first indication information may include an index of each of the at least one duration. The terminal device may determine the at least one duration based on the index included in the first indication information, and further determine the duration of the first timer based on the at least one duration. When the first time information is indexes corresponding to a plurality of durations, the terminal device may determine a maximum duration of the plurality of durations as the timing duration of the first timer, to reserve sufficient time to determine whether the link is abnormal, thereby reducing misjudgment. In the indication manner B, the first indication information includes the index of the first time information, so that bit overheads of the first indication information can be reduced.

Indication manner C: The first indication information includes identifier information of a first service, where the first service is associated with the first time information.

Considering that different types of services require different processing durations, corresponding durations may be set for different types of services. For example, a service 1 corresponds to time information 1, and a service 2 corresponds to time information 2. A correspondence between a service type and time information may be (pre-)configured, and the terminal device may store the correspondence. In this case, the time information may be indicated by using the service type. For example, the first time information is associated with/corresponds to the first service. In this case, the first indication information may include the identifier information of the first service or a type identifier of the first service. The terminal device receives the first indication information, and may determine the first time information based on a type of the first service and the correspondence between the service type and the time information. One piece of time information may correspond to one type of service or a plurality of types of services, and one piece of time information may be a duration.

To reserve sufficient time for the terminal device to determine whether a link is abnormal and therefore reduce misjudgment, the first timer is usually set based on a maximum delay. For example, the first timer is set based on a maximum delay of delays of a plurality of services. In this case, for some services with short processing delays, the terminal device still waits, based on the maximum delay, to see whether there is data from the access network device, which causes extra unnecessary waiting time. Consequently, next service transmission of the terminal device is started late, and overall transmission efficiency is low. In the indication manner C, the access network device configures the timing duration of the first timer for the terminal device based on a service type, and a timer used by the terminal device matches a service. Compared with using a same timing duration for different services, in the indication manner, unnecessary waiting time for the terminal device can be reduced, so that next transmission can be performed in a timely manner, thereby improving transmission efficiency.

In a possible implementation, the first time information may be (pre-)configured. In this case, S501 is a step that does not need to be performed, and is therefore represented by a dashed line in FIG. 5. The first time information may be a relatively proper duration obtained based on prior information or a prior experiment. The terminal device sets the first timer based on the first time information. Alternatively, a correspondence between a service type and time information may be (pre-)configured. The correspondence may also be a relatively proper correspondence obtained based on prior information or a prior experiment. The terminal device may set the first timer based on a to-be-performed service and the correspondence.

Indication manner D: The first indication information indicates that an existing timer is reused to set the first timer. For example, a second timer used to determine whether a link is abnormal in a random procedure may be (pre-)configured, or a second timer used for random access is (pre-)configured. When the second timer is (pre-)configured, the first indication information may indicate that the timing duration of the first timer is determined based on a timing duration of the second timer, or the first indication information may indicate that the second timer is reused to determine whether a link is abnormal in a data transmission procedure, or the first indication information indicates that the second timer is used as the first timer. In this case, the first indication information may be information of N bits, and when a value of the N bits is a first value, it indicates that the timing duration of the first timer is determined based on the timing duration of the second timer. N is a positive integer.

Alternatively, a plurality of timers have been (pre-)configured, and the first indication information may indicate one of the plurality of timers. For example, the first indication information indicates a shortest timer or a longest timer of the plurality of timers. For example, the first indication information may be information of 1 bit. When a value of the 1 bit is a first value, it indicates that the first timer is a shortest timer of a plurality of timers. When a value of the 1 bit is a second value, it indicates that the first timer is a longest timer of a plurality of timers.

Alternatively, the first indication information is information dedicated to indicating the first timer. The terminal device receives the first indication information, and the first timer is a shortest timer or a longest timer of at least one timer by default.

Signaling that carries the first indication information is not limited in embodiments of this application. For example, the terminal device does not establish a connection to the access network device, and the first indication information may be carried in a paging message. The paging message is used to page, select, or trigger at least one terminal device to access or send uplink data. In this case, the access network device sends the first indication information, that is, the access network device sends a paging message, where the paging message includes the first indication information. It may be understood that the paging message may further include identifier information of the terminal device. Alternatively, the access network device may broadcast the paging message, to page a plurality of terminal devices. The paging message may be a paging message in a cellular network, or may be implemented by using a downlink trigger message. The downlink trigger message can be a select (select) message or a query message. For a paging message that appears in the following other procedures, refer to the description herein. Details are not described herein again.

It may be understood that, if the first indication information is carried in a select (select) message, a query message, or a paging message, the terminal device may subsequently determine, based on the first timer, whether a link is abnormal in a random procedure. For example, after sending a random number, the terminal device may start the first timer. If the terminal device does not receive a response (similar to the acknowledgment message in S306 or S406) to the random number within the timing duration of the first timer, the terminal device may determine that the link is abnormal in the random access procedure.

After accessing a network, the terminal device may perform service interaction or data transmission with the access network device or the core network element. The "data transmission" is data/information transmission performed by the terminal device after accessing the network. The terminal device may further determine, based on the first timer, whether a link is abnormal in a data transmission procedure. For example, after sending first information, the terminal device starts the first timer. The first information may be any message or data sent by the terminal device. If the terminal device does not receive a response to the first information or a message from a peer end within the timing duration of the first timer, the terminal device may determine that the link is abnormal in the data transmission procedure. It may be understood that the timing duration of the first timer is a duration from start of the first timer to expiry of the first timer.

A service of the terminal device may occur between the terminal device and the access network device, or may occur between the terminal device and the core network element. A processing delay for service data from the terminal device may differ between the access network device and the core network element. To reserve sufficient time for the terminal device to determine whether a link is abnormal and therefore reduce misjudgment, the core network element may provide time information for the access network device, to assist the access network device in determining the first indication information. For example, before S501, S500 may be performed.

S500: The core network element sends third indication information to the access network device, where the third indication information may be used to determine the timing duration of the first timer. Correspondingly, the access network device receives the third indication information.

The third indication information may indicate third time information. The third indication information may be used to determine the timing duration of the first timer, or the third indication information is used to determine the first indication information. For a specific implementation of the third indication information, refer to the foregoing specific implementation in which the first indication information indicates the first time information. Details are not described herein again.

The third time information may be the same as or different from the first time information. For example, the third time information includes at least one first duration, and the first time information may be one or more first durations of the at least one first duration. For another example, the third time information includes at least one first duration, and the first time information may be at least one second duration. Each second duration is a sum of the first duration and an offset value, where the offset value may be a positive number or a negative number. For another example, the third time information includes at least one first duration, and the access network device may select, from the at least one first duration based on a service to be performed by the terminal device, a first duration corresponding to the service as the first time information.

Signaling that carries the third indication information is not limited in embodiments of this application. For example, the third indication information may be carried in an interface message, for example, an N2 message, between the access network device and the core network element. In this case, that the core network element sends the third indication information to the access network device is that the core network element sends the N2 message to the access network device, where the N2 message includes the third indication information. The N2 message may further include service information. For example, when the core network element needs to perform an inventory operation on the terminal device, the N2 message may include information about the inventory operation. The access network device may determine, based on the service information in the N2 message, a service to be performed by the terminal device, so as to configure an appropriate first timer for the terminal device based on the service. The N2 message may further include identifier information of the terminal device, so that the access network device determines a terminal device with which the core network element needs to communicate.

In a possible implementation, the third time information may be (pre-)configured. In this case, S500 is a step that does not need to be performed, and is therefore represented by a dashed line in FIG. 5. The third time information may be a relatively proper duration obtained based on prior information or a prior experiment. The access network device determines the first time information based on the third time information. Alternatively, a correspondence between a service type and time information may be (pre-)configured. The correspondence may also be a relatively proper correspondence obtained based on prior information or a prior experiment. The access network device determines the first time information based on the service to be performed by the terminal device and the correspondence. Only some implementations in which the third indication information indicates the third time information are listed above. How the third indication information indicates the third time information is not limited in embodiments of this application. For example, the third indication information may alternatively include a service data volume, and service data volumes of different sizes correspond to different durations. The access network device may determine the first time information based on the service data volume. For example, if a service data volume is large, a duration corresponding to the first time information is long; or if a service data volume is small, a duration corresponding to the first time information is short.

S502: The access network device sends second indication information to the terminal device, where the second indication information indicates second time information, and may be used to determine the timing duration of the first timer. Correspondingly, the terminal device receives the second indication information.

As described above, if the paging message that carries the first indication information is implemented by using a select message in an RFID system, the terminal device may determine, based on the first timer, whether a link is abnormal in a random access procedure. The terminal device may further determine, based on the first timer, whether a link is abnormal in a data transmission procedure.

In an implementation, a timer used to determine whether the link is abnormal in the data transmission procedure may be different from a timer used to determine whether the link is abnormal in the random access procedure. For distinguishing, the access network device may indicate the timing duration of the first timer by using the second indication information. For example, the second indication information may be carried in an acknowledgment message, where the acknowledgment message indicates the terminal device to send data, or is used to confirm that the terminal device successfully sends data. The acknowledgment message may be a response message to a random number in the RFID system. A specific name of the acknowledgment message is not limited in embodiments of this application. For example, the acknowledgment message may also be referred to as a random access response message, a conflict response message, or the like.

When the access network device sends the first indication information but does not send the second indication information, the terminal device determines the timing duration of the first timer based on the first indication information. In this case, the first timer may be used to determine whether the link is abnormal in the data transmission procedure, or may be used to determine whether the link is abnormal in the random access procedure.

Because a delay of information exchange on the link in the random access procedure is usually fixed, a timer (namely, the second timer) used to determine whether the link is abnormal in the random access procedure is usually fixed. However, a delay of information exchange in the data transmission procedure varies depending on different services. To reduce misjudgment, a timer used to determine whether the link is abnormal in the data transmission procedure may be flexibly configured by the access network device.

For example, when the access network device sends the first indication information and the second indication information, the terminal device may determine the timing duration of the first timer based on the second time information, where the first timer is used to determine whether the link is abnormal in the data transmission procedure. A timer determined by the terminal device based on the first time information is used to determine whether the link is abnormal in the random access procedure. This is equivalent to that the terminal device determines, based on time recently indicated by the access network device, a timer used to determine whether the link is abnormal in the data transmission procedure, to reduce misjudgment. Alternatively, when the second timer is (pre-)configured, and the access network device sends the first indication information but does not send the second indication information, the terminal device determines the first timer based on the first indication information, to determine whether the link is abnormal in the data transmission procedure. The terminal device may determine, based on the second timer, whether the link is abnormal in the random access procedure.

The second indication information may directly indicate the second time information, or may indirectly indicate the second time information. For example, the second indication information includes the second time information, or the second indication information includes an index of the second time information, or the second indication information includes identifier information of a second service, where the second service is associated with the second time information. For an implementation of the second indication information, refer to the foregoing implementation in which the first indication information indicates the first time information. Details are not described herein again.

The access network device may not send the second indication information. Therefore, S502 is not a mandatory step, and is represented by a dashed line in FIG. 5. S501 is performed, and S502 may not be performed; or S501 may not be performed, and S502 is performed; or S501 and S502 may be performed; or S501 and S502 are not performed, and the terminal device determines the timing duration of the first timer based on a pre-configuration.

S503: The terminal device sends first information to a network device or receives second information from the network device, and starts the first timer.

The network device may be an access network device, or may be a core network element. After accessing a network, the terminal device may exchange information with the access network device or the core network element. For example, the terminal device may send the first information to the network device, or may receive the second information from the network device. The first information may be any message or data sent by the terminal device. The second information may be a message or data sent from another device to the terminal device. The second information may be sent to a plurality of terminal devices, or may be sent to the terminal device. When the second information is sent to a plurality of terminal devices, the terminal devices to which the second information is sent may be distinguished by using an identifier or a scrambling manner (for example, a radio network temporary identifier (radio network temporary identifier, RNTI). When the second information is not sent to the terminal device, or the terminal device receives the second information but fails to parse the second information, the terminal device does not start the first timer even if the terminal device receives the second information. For example, when an identifier (for example, a process ID or a random number (random number, RN) sequence) carried in the second information does not match an identifier stored in the terminal device, or the terminal device fails to descramble the second information, the terminal device does not start the first timer even if the terminal device receives the second information.

In embodiments of this application, after sending the first information to the network device or receiving the second information from the network device, the terminal device may start the first timer, to determine whether a link is abnormal. If the first timer expires, the terminal device may determine that the link is abnormal. Alternatively, if the terminal device does not receive third information from the network device within the timing duration of the first timer, the terminal device may determine that the link is abnormal. Alternatively, if the first timer expires and the terminal device does not receive third information from the network device, the terminal device may determine that the link is abnormal. Alternatively, when the terminal device does not receive third information within the timing duration of the first timer, the terminal device considers that data transmission is abnormal after the terminal device accesses the network. On the contrary, if the first timer does not expire (or the first timer is running), and the terminal device receives a downlink message (for example, the third information), the terminal device may determine that the link is normal (data transmission is successful or a current service is completed).

When the terminal device sends the first information to the network device, the third information may be a response to the first information, or the third information may be downlink data/downlink information/downlink signaling sent by the network device, for example, a MAC control element (control element, CE). If the terminal device receives the third information before the first timer expires, the terminal device may restart/reset the first timer.

It should be noted that, in FIG. 5, the terminal device may either send the first information to the network device or receive the second information from the network device, or perform both.

S504: When determining that the first timer expires and no third information is received from the network device, the terminal device performs at least one of the following operations.

When determining that the link is abnormal, the terminal device may perform one or more of the following operations.
(A) The terminal device disconnects, at an AS, from the network device.

When the terminal device does not receive the third information within the timing duration of the first timer, the terminal device considers that data transmission is abnormal after the terminal device accesses the network. In this case, the terminal device may actively disconnect from the network device. For example, the terminal device may indicate, by using a higher layer, that the terminal device disconnects, at the AS, from the network device, or the terminal device indicates, by using a higher layer, the AS to release a connection to the network device. That the AS releases the connection to the network device includes deleting some information configured by the network device for the terminal device. If the terminal device considers that the link is abnormal, the terminal device releases the connection, and enters an idle state. After the terminal device switches to the idle state, if the terminal device receives a query message or a query repeat message again, the terminal device may send an access request message to the access network device again, to access the network again. For example, the terminal device may send a random number to the access network device. A specific process is not described again.

A specific name of the query repeat message is not limited in embodiments of this application, or the query repeat message may have another name. The query repeat message may be used to implement one or more of the following functions.
(1) Trigger a next access time resource (an access slot), which may be used for access of the terminal device. For example, after receiving the query repeat message, the terminal device updates a counter (counter) used to record a quantity of random numbers, for example, counter = counter - 1 or counter = counter + 1. When the counter reaches a threshold, the terminal device initiates an access request.
(2) End a slot of a terminal that is performing data transmission.
(3) Confirm successful reception of data/information. After the terminal device sends data/information, if the terminal device receives a query repeat message before the first timer expires, it indicates that the data/information is successfully received.
(4) If the terminal device sends information/data, and receives a query repeat message, the terminal device may flip a flag, where the flag identifies an access state of the terminal device or identifies whether the terminal device successfully communicates with a peer end.

If a value of the flag is 0, it indicates that the access state of the terminal device is A. If a value of the flag is 1, it indicates that the access state of the terminal device is B. If the terminal device successfully communicates with the peer end, the terminal device flips the flag, that is, changes the value of the flag from 0 to 1 or from 1 to 0.

(B) The terminal device enters a first state. When in the first state, the terminal device responds only to a paging message or a downlink trigger message, where the downlink trigger message includes a query message or a select message.

It may be understood that the terminal device has a plurality of states, for example, an idle state and a connected state. The first state may be considered as the idle state, or may be referred to as an initial state. The first state is a state in which the terminal device can respond only to the paging message or the downlink trigger message. That is, when in the first state, the terminal device responds only to the paging message or the downlink trigger message. The downlink trigger message may be used to page, select, or trigger at least one terminal device to access or send data. For example, the downlink trigger message has a function similar to those of a select message or a query message in the RFID system, or the downlink trigger message may be similar to a select message and a query message in the RFID system. A specific name of the downlink trigger message is not limited in embodiments of this application. Optionally, the downlink trigger message does not include a query repeat (QueryRep) message. It should be understood that the query repeat message is used to trigger an access resource. After the terminal device enters the first state, if the terminal device receives a query message or a select message again, the terminal device may send an access request message to the access network device again, to access the network again. For example, the terminal device may send a random number to the access network device. A specific process is not described again.

(C) The terminal device sends a first message to the network device, where the first message indicates that a link of the terminal device is abnormal.

When determining that the link is abnormal, the terminal device may further send the first message to the network device, to indicate that the link of the terminal device is abnormal. A link abnormality may also be referred to as a link failure. That the first message indicates that the link of the terminal device is abnormal may be replaced with the following: The first message indicates that the terminal device performs a release/disconnection at the AS, the terminal device disconnects from the network device, or the terminal device disconnects, at the AS layer, from the network device. The terminal device notifies, by using the first message, the network device that the link of the terminal device is abnormal, so that the network device can be assisted in using an appropriate policy to end a transmission procedure of the terminal device or stop a service procedure of the terminal device. For example, even if the network device still has other data to be transmitted, when the network device learns that the link of the terminal device is abnormal, the network device no longer sends the to-be-transmitted data.

The first message may be uplink indication information or feedback information for downlink data, for example, feedback. The first message may carry 1 bit to indicate that the downlink data fails to be received (transmission is abnormal) or the downlink data is successfully received, or the first message includes an ACK/NACK, which may be carried in an RRC message or a MAC control element (control element, CE).

(D) Keep/maintain a flag unchanged, where the flag identifies an access state of the terminal device.

Keeping the flag unchanged (assuming that the flag is A) may be understood as that the terminal device does not successfully perform data transmission, or may be understood that, for the terminal device, a current service is not ended, and the terminal device needs to continue to listen to a paging or downlink trigger message carrying the same flag A, or resend an access request/a connection establishment request. If the flag is flipped (A is flipped to B), it indicates that the terminal device successfully performs data transmission or has completed the current service, and the terminal device does not respond to the paging or downlink trigger message carrying the flag A. When the terminal device determines that the link is abnormal, the terminal device may not flip the flag, that is, keep a value of the flag unchanged. In this way, when current link quality is poor, the terminal device may stop a current data transmission procedure based on the flag, and listen to a paging or downlink trigger message again, to reduce unnecessary data transmission.

When the terminal device determines that the link is normal, data transmission is successful, or the current service is completed, the terminal device does not perform an operation related to a link abnormality. For example, the terminal device does not perform random access, does not perform reselection and random access, does not enter the first state, or flips/changes the flag.

Compared with determining link quality based on measurement on a reference signal resource, determining, based on the first timer, whether the link is abnormal in the data transmission procedure in the communication method 500 achieves lower processing complexity. In addition, the timing duration of the first timer may be configured based on a service to be performed by the terminal device. In this way, sufficient time may be reserved for the terminal device to determine whether a link is abnormal, thereby reducing misjudgment. In addition, the first timer matches the service, which may also reduce unnecessary waiting time for the terminal device, so that next transmission can be performed in a timely manner, thereby improving transmission efficiency.

An embodiment of this application further provides a communication method 600. In the communication method 600, after a terminal device sends information to a network device, if the terminal device receives feedback from the network device, it may be considered that current data transmission is successful, and there is subsequent information from the network device. In this case, the terminal device continues to detect information from the network device. If the terminal device receives a query repeat message after receiving the feedback from the network device, it is considered that a link is abnormal, and the terminal device may perform one or more of the foregoing (A) to (D).

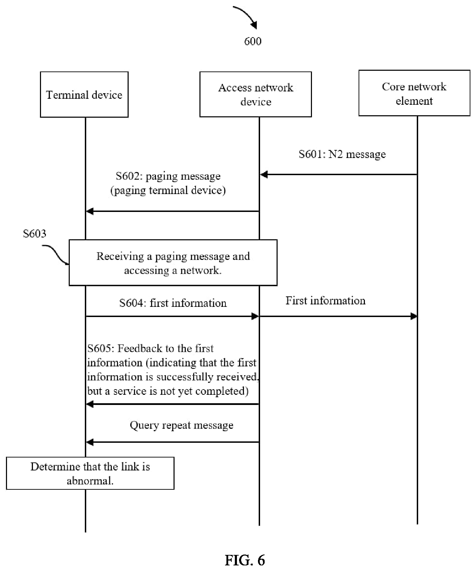

FIG. 6 is a schematic flowchart of a communication method 600 according to an embodiment of this application. In FIG. 6, an example in which a first communication device is an access network device, a second communication device is a terminal device, and a third communication device is a core network element is used to describe the method from a perspective of interaction between the access network device, the core network element, and the terminal device. It should be understood that the communication method 600 may alternatively be implemented by another apparatus, for example, a chip or a communication apparatus that has a communication function. The terminal device may be a tag or an A-IoT terminal. As shown in FIG. 6, a procedure of the communication method 600 includes the following steps.

S601: The core network element sends an N2 message to the access network device.

Correspondingly, the access network device receives the N2 message, where the N2 message may be used to request a service operation on the terminal device. The N2 message may include an identifier information of the terminal device.

S602: The access network device sends a paging message.

The access network device receives the N2 message, and may page the terminal device based on the N2 message. For example, the access network device may broadcast the paging message, to page, select, or trigger at least one terminal device to access or send uplink data. The paging message may be a paging message in a cellular system, or may be implemented by using a downlink trigger message. The downlink trigger message can be a select (select) message or a query message.

S603: The terminal device receives the paging message, and accesses a network.

S603 may be S303 to S306 in FIG. 3. For details, refer to related content in FIG. 3. Details are not described herein again.

S604: The terminal device sends first information to the network device.

The network device may be an access network device or a core network element. After accessing the network, the terminal device may send service data to the network device. For example, the terminal device sends the first information to the network device.

S605: The terminal device receives, from the network device, feedback to the first information.

The terminal device sends the first information, and may detect the feedback from the network device. If the feedback to the first information is received from the network device, it may be considered that the current data transmission is successful, and there is subsequent information from the network device. Alternatively, the network device sends the feedback to the first information to the terminal device, indicating that the first information is successfully received, and implicitly indicating that there is subsequent service information or that a service is not completed. In this case, the terminal device continues to detect information from the network device. If the terminal device receives the query repeat message after receiving, from the network device, the feedback to the first information, it is considered that the link is abnormal (this is used as an example in FIG. 6), and the terminal device may perform one or more of the foregoing (A) to (D).

After sending the first information, the terminal device may start a second timer. If no feedback is received from the network device within a timing duration of the second timer, it is considered that no feedback is received from the network device. The second timer may be a (pre-)configured timer, which is used by the terminal device to determine whether a link is abnormal/fails in a random access procedure.

It can be learned from the procedure in FIG. 4 that the access network device needs to wait for the end_marker fed back by the core network element before releasing a temporary identifier of the terminal device and releasing the terminal device. If a processing delay of the core network element is long, waiting time of the access network device is also long, and overall service processing efficiency is low.

In view of this, an embodiment of this application further provides a communication method 700. In the communication method 700, after sending information to a core network element, an access network device may start a third timer. If no feedback is received from the core network element within a timing duration of the third timer, it is considered that current service transmission ends, and then a connection to a terminal device can be released, and a next service can be continued. Compared with a current situation in which the access network device keeps waiting for the core network element to feed back the end_marker, this can avoid that the terminal device cannot be released and a service cannot be continued for a long period of time.

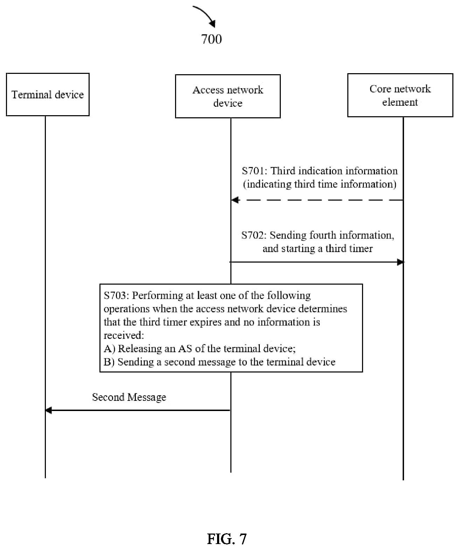

FIG. 7 is a schematic flowchart of a communication method 700 according to an embodiment of this application. In FIG. 7, an example in which a first communication device is an access network device, a second communication device is a terminal device, and a third communication device is a core network element is used to describe the method from a perspective of interaction between the access network device, the core network element, and the terminal device. It should be understood that the communication method 700 may alternatively be implemented by another apparatus, for example, a chip or a communication apparatus that has a communication function. The terminal device may be a tag or an A-IoT terminal. As shown in FIG. 7, a procedure of the communication method 700 includes the following steps.

S701: The core network element sends third indication information to the access network device.

Correspondingly, the access network device receives the third indication information from the core network element. The third indication information may be used to determine the timing duration of the third timer. For example, the third indication information indicates third time information. The access network device receives the third indication information, and may determine, based on the third time information indicated by the third indication information, the timing duration of the third timer. For specific implementation of the third indication information, refer to related content of the third indication information in S500. The third indication information may be further used to determine a timing duration of a first timer. The access network device receives the third indication information, and may determine, based on the third time information indicated by the third indication information, the timing duration of the first timer or the timing duration of the third timer. The timing duration of the third timer may be the same as or different from the timing duration of the first timer.

S702: The access network device sends fourth information to the core network element, and starts the third timer.

Correspondingly, the core network element receives the fourth information from the access network device. The fourth information may carry content to be sent from the terminal device to the core network element. The access network device receives, from the terminal device, the content to be sent to the core network element, and sends the fourth information to the core network element.

Optionally, the access network device receives fifth information from the core network element, and may start the third timer. The fifth information may be a response or feedback from the core network element to information received from the access network device, and indicates to the access network device that the core network element will further send information to the access network device.

S703: When determining that the third timer expires and that no information is received from the core network element, the access network device performs one or more of the following operations (A) to (D). The information from the core network element may be a response to the fourth information, or may be other information sent from the core network element to the access network device. The other information may be information associated with the terminal device. For example, the other information is associated with a temporary identifier of the terminal device.
(A) Release an AS of the terminal device.
   Releasing the AS of the terminal device includes releasing/disconnecting a connection of the terminal device or releasing/deleting some related information. For example, the access network device releases context information of the terminal device.
(B) Send a second message to the terminal device.
   The second message may be similar to a query repeat message in an RFID system. The second message may be used to trigger a next access time resource. Alternatively, the second message may indicate to release/end a slot of the terminal that is performing data transmission, or indicate to end a service procedure/data transmission procedure, or indicate to release a connection of the terminal device.
(C) Send a third message to the terminal device.

The third message may indicate a link abnormality, a processing exception, a service (processing) timeout, to release/end a slot of a terminal that is performing data transmission, to end a service procedure/data transmission procedure, or to release a connection of the terminal device.

The terminal device receives the third message, and may perform a corresponding operation based on the third message. For example, based on the third message, the terminal device disconnects, at the AS layer, from the network device.

The third message may be an RRC message or a MAC CE.

(D) The access network device sends a fourth message to the core network element.

The fourth message may be an interface message between the access network device and the core network element. The fourth message may indicate that the terminal device is released, that a service procedure associated with a current terminal device is ended, a processing exception, or to resend a response to the fourth information. When determining that the third timer expires and that no response to the fourth information is received, the access network device may release the terminal device, and indicate to the core network element that the terminal device is released.

In the communication method 700, based on the third timer, the access network device releases the connection to the terminal device without keeping waiting for feedback (for example, the end_marker) from the core network element or data (for example, an N2 message, a service request message, or service-related data) sent from the core network element to the access network device. This can avoid that the terminal device cannot be released and a service cannot be continued for a long period of time.

The communication method 500 and the communication method 700 may be combined, or may be separately implemented. When the communication method 500 is combined with the communication method 700, the core network element sends the third indication information to the access network device, and the access network device may send, based on the third indication information, first indication information to the terminal device, so that the terminal device determines the first timer based on the first indication information. The access network device may determine the third timer based on the third indication information. When the communication method 500 and the communication method 700 are separately implemented, the third time information indicated by the third indication information sent from the core network element to the access network device in the communication method 500 may be the same as or different from the third time information indicated by the third indication information sent from the core network element to the access network device in the communication method 700. The communication method 600 and the communication method 700 may be combined, or may be separately implemented.

In the foregoing embodiments provided in this application, the methods provided in embodiments of this application are separately described from a perspective of interaction between the access network device, the core network element, and the terminal device. The steps performed by the core network element may be implemented by different functional entities forming the core network element. The steps performed by the access network device may be implemented by different functional entities forming the access network device. For example, the access network device may be in a CU-DU architecture, where the CU may generate the first indication information, and the DU may send the first indication information. To implement the functions in the foregoing methods provided in embodiments of this application, the terminal device, the access network device, and the core network element may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes communication apparatuses for implementing the foregoing methods in embodiments of this application with reference to the accompanying drawings. Therefore, all the foregoing content may be used in the following embodiments. Repeated content is not described again.

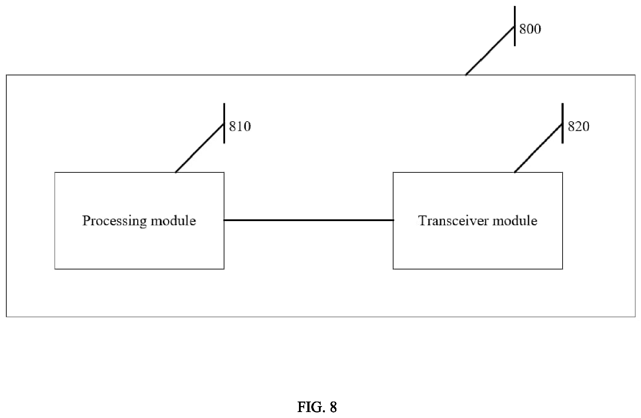

FIG. 8 is a schematic block diagram of a communication apparatus 800 according to an embodiment of this application. The communication apparatus 800 may be the access network device or the core network element in the foregoing embodiments. For example, the communication apparatus 800 may be the access network device in FIG. 1 or a device in a core network 200; or the communication apparatus 800 is a chip (system) in an access network device or a chip (system) in a core network element; or the communication apparatus 800 is a software module of an access network device or a core network element. The communication apparatus 800 may correspondingly implement functions or steps implemented by the core network element or the access network device in the foregoing method embodiments. The communication apparatus 800 may include a processing module 810 and a transceiver module 820. Optionally, a storage module may be further included. The storage module may be configured to store instructions (code or a program) and/or data. The storage module may be, for example, a memory. The processing module 810 and the transceiver module 820 may be coupled to the storage module. For example, the processing module 810 may read the instructions (the code or the program) and/or the data in the storage module, to implement a corresponding method. When the communication apparatus 800 is the chip in the core network element, the storage module may be a storage module in the chip, for example, a register or a cache. For example, the storage module may alternatively be a storage module that is in the access network device/core network element and that is located outside the chip, for example, a read-only memory (read-only memory, ROM), another type of static storage device that can store static information and instructions, or a random access memory (random access memory, RAM). The foregoing units may be independently disposed, or may be partially or completely integrated.

The processing module 810 may be a processor or a controller, such as a general-purpose central processing unit (central processing unit, CPU), a general-purpose processor, a digital signal processor (digital signal processing, DSP), an application specific integrated circuit (application specific integrated circuits, ASIC), a field programmable gate array (field programmable gate array, FPGA), or another programmable logic device, a transistor logic device, a hardware component, or any combination thereof. The processing module 810 may implement or execute various example logical blocks, modules, and circuits described with reference to content disclosed in this application. The processor may alternatively be a combination of processors implementing a computing function, for example, a combination of one or more microprocessors, or a combination of a DSP and a microprocessor. The transceiver module 820 is a transceiver, an interface circuit, a bus, a pin, or another possible communication interface, and is configured to receive a signal from another apparatus. For example, when the apparatus is implemented in a form of a chip, the transceiver module 820 is an interface circuit used by the chip to receive a signal from another chip or apparatus, or is an interface circuit used by the chip to send a signal to another chip or apparatus.

In an implementation, the communication apparatus 800 can correspondingly implement behavior and functions of the terminal device in the foregoing method embodiments. The communication apparatus 800 may be a terminal device, may be a component (for example, a chip or a circuit) used in the terminal device, may be a chip or chipset in the terminal device or a part that is of the chip and that is configured to perform a related method function, or may be a software module that can implement the method performed by the terminal device in the foregoing method (for example, the communication method 500, the communication method 600, or the communication method 700). This is not limited. For details, refer to related content in the foregoing method embodiments. Details are not described herein again.

For example, the transceiver module 820 is configured to send first information to a network device or receive second information from the network device. The processing module 810 is configured to: start a first timer; and when determining that the first timer expires and that no third information is received from the network device, perform one or more of the following: disconnecting, at an AS, from the network device; or entering a first state. When in the first state, the communication apparatus 800 responds only to a paging message or a downlink trigger message, where the downlink trigger message includes a query message or a select message.

In an optional implementation, the transceiver module 820 is further configured to send a first message to the network device, where the first message indicates that a link of the communication apparatus 800 is abnormal.

In an optional implementation, the processing module 810 is further configured to keep a flag unchanged, where the flag identifies an access state of the communication apparatus 800.

In an optional implementation, the transceiver module 820 is further configured to receive first indication information, where the first indication information is used to determine a timing duration of the first timer.

In an optional implementation, the first indication information indicates first time information, and the first time information indicates the timing duration of the first timer; or the first indication information indicates that the timing duration of the first timer is determined based on a timing duration of a second timer, and the second timer is used for random access.

In an optional implementation, that the first indication information indicates the first time information includes: The first indication information includes the first time information; the first indication information includes an index of the first time information; or the first indication information includes identifier information of a first service, where the first service is associated with the first time information.

In an optional implementation, the first indication information is carried in the paging message, and the transceiver module 820 is further configured to receive second indication information, where the second indication information indicates second time information, the second time information is used to determine the timing duration of the first timer, the second indication information is carried in an acknowledgment message, and the acknowledgment message indicates the communication apparatus 800 to send data, or is used to confirm that the communication apparatus 800 successfully sends data.

In an optional implementation, the timing duration of the first timer is determined based on the second time information.

In an optional implementation, that the second indication information indicates the second time information includes: The second indication information includes the second time information; the second indication information includes an index of the second time information; or the second indication information includes identifier information of a second service, where the second service is associated with the second time information.

In an implementation, the communication apparatus 800 can correspondingly implement behavior and functions of the access network device in the foregoing method embodiments. The communication apparatus 800 may be an access network device, may be a component (for example, a chip or a circuit) used in the access network device, may be a chip or chipset in the access network device or a part that is of the chip and that is configured to perform a related method function, or may be a software module that can implement the method performed by the access network device in the foregoing method (for example, the communication method 500, the communication method 600, or the communication method 700). This is not limited. For details, refer to related content in the foregoing method embodiments. Details are not described herein again.

For example, the processing module 810 is configured to determine first indication information, where the first indication information is used to determine a timing duration of a first timer, and the first timer is used by a terminal device to determine whether a link is abnormal. The transceiver module 820 is configured to send the first indication information to the terminal device.

In an optional implementation, the first indication information indicates first time information, and the first time information indicates the timing duration of the first timer; or the first indication information indicates that the timing duration of the first timer is determined based on a timing duration of a second timer, and the second timer is used for random access.

In an optional implementation, that the first indication information indicates the first time information includes: The first indication information includes the first time information; the first indication information includes an index of the first time information; or the first indication information includes identifier information of a first service, where the first service is associated with the first time information.

In an optional implementation, the transceiver module 820 is further configured to send second indication information to the terminal device, where the second indication information indicates second time information, the second time information is used to determine the timing duration of the first timer, the second indication information is carried in an acknowledgment message, and the acknowledgment message indicates the terminal device to send data, or is used to confirm that the terminal device successfully sends data.

In an optional implementation, that the second indication information indicates the second time information includes: The second indication information includes the second time information; the second indication information includes an index of the second time information; or the second indication information includes identifier information of a second service, where the second service is associated with the second time information.

In an optional implementation, the transceiver module 820 is further configured to send fourth information to a core network element, and the processing module 810 is further configured to: start a third timer; and when determining that the third timer expires and that no response to the fourth information is received, perform one or more of the following: releasing an AS of the terminal device; or sending a second message to the terminal device, where the second message is used to trigger a next access time resource.

In an optional implementation, the transceiver module 820 is further configured to receive third indication information from the core network element, where the third indication information is used to determine a timing duration of the third timer, and/or is used to determine the timing duration of the first timer.

In an optional implementation, the third indication information indicates third time information, and the third time information is used to determine the timing duration of the third timer and/or the timing duration of the first timer.

In an optional implementation, the transceiver module 820 is further configured to send a third message to the terminal device, where the third message indicates that a link of the terminal device is abnormal.

In an optional implementation, the transceiver module 820 is further configured to send a fourth message to the core network element, where the fourth message indicates that the terminal device is released.

For another example, the transceiver module 820 is configured to send fourth information to the core network element, and the processing module 810 is further configured to: start a third timer; and when determining that the third timer expires and that no response to the fourth information is received, perform one or more of the following: releasing an AS of the terminal device; or sending a second message to the terminal device, where the second message is used to trigger a next access time resource.

In an optional implementation, the transceiver module 820 is further configured to receive third indication information from the core network element, where the third indication information is used to determine a timing duration of the third timer, and/or is used to determine the timing duration of the first timer.

In an optional implementation, the third indication information indicates third time information, and the third time information is used to determine the timing duration of the third timer and/or the timing duration of the first timer.

In an optional implementation, the transceiver module 820 is further configured to send a third message to the terminal device, where the third message indicates that a link of the terminal device is abnormal.

In an optional implementation, the transceiver module 820 is further configured to send a fourth message to the core network element, where the fourth message indicates that the terminal device is released.

In an implementation, the communication apparatus 800 can correspondingly implement behavior and functions of the core network element in the foregoing method embodiments. The communication apparatus 800 may be a core network element, may be a component (for example, a chip or a circuit) used in the core network element, may be a chip or chipset in the core network element or a part that is of the chip and that is configured to perform a related method function, or may be a software module that can implement the method performed by the core network element in the foregoing method (for example, the communication method 500, the communication method 600, or the communication method 700). This is not limited. For details, refer to related content in the foregoing method embodiments. Details are not described herein again.

For example, the processing module 810 is configured to determine third indication information, where the third indication information is used to determine a timing duration of a third timer and/or a timing duration of a first timer, the first timer is used by a terminal device to determine whether a link is abnormal, and the third timer is used by an access network device to determine whether to release the terminal device. The transceiver module 820 is configured to send the third indication information to the access network device.

In an optional implementation, the third indication information indicates third time information, and the third time information is used to determine the timing duration of the third timer and/or the timing duration of the first timer.

When the communication apparatus 800 is a chip-type apparatus or circuit, the transceiver module may be an input/output circuit and/or a communication interface, and the processing module is an integrated processor, a microprocessor, or an integrated circuit.

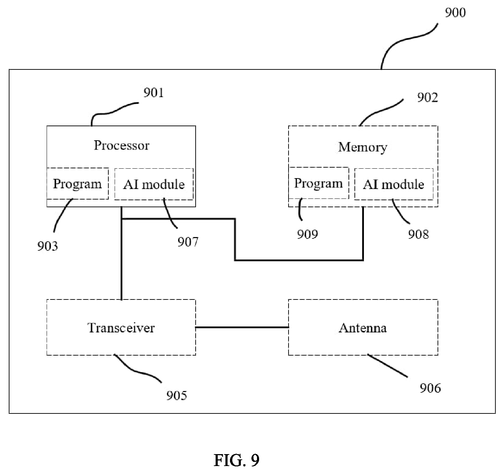

FIG. 9 is a schematic block diagram of a communication apparatus 900 according to an embodiment of this application. The communication apparatus 900 may be the terminal device, the access network device, or the core network element in the foregoing embodiments. For example, the communication apparatus 900 may be the access network device, the terminal device, or the core network element in FIG. 1; or the communication apparatus 900 is a chip (system) in the access network device, the terminal device, or the core network element. In this embodiment of this application, the chip system may include a chip, or may include a chip and another discrete device. For a specific function, refer to the description in the foregoing method embodiments.

The communication apparatus 900 includes one or more processors 901, configured to implement or support the communication apparatus 900 in implementing functions of the terminal device, the core network element, or the access network device in the method provided in embodiments of this application. For details, refer to detailed description in the method example. Details are not described herein again. The processor 901 may also be referred to as a processing unit or a processing module, and may implement a specific control function. The processor 901 may be a general-purpose processor, a dedicated processor, or the like. For example, the processor 901 includes a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to: control the communication apparatus 900 (for example, a network apparatus or a terminal apparatus), execute a software program, and/or process data. Different processors may be independent components, or may be integrated into one or more processors, for example, integrated into one or more application-specific integrated circuits.

In a design, the processor 901 may include a program 903 (which may sometimes also be referred to as code or instructions). The program 903 may be run on the processor 901, to cause the communication apparatus 900 to perform the method described in the following embodiments. In still another possible design, the communication apparatus 900 includes a circuit (not shown in FIG. 9), and the circuit is configured to implement a function of the terminal device, the access network device, or the core network element in the foregoing embodiments.

In a design, the communication apparatus 900 may include one or more memories 902. The memory 902 stores a program 909 (which may sometimes also be referred to as code or instructions). The program 909 may be run on the processor 901, to cause the communication apparatus 900 to perform the method described in the foregoing method embodiments, for example, the procedure shown in FIG. 5, FIG. 6, or FIG. 7.

In a design, the processor 901 and/or the memory 902 may include an artificial intelligence (artificial intelligence, AI) module 907 and an AI module 908. The AI module is configured to implement an Al-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 901 and/or the memory 902 may further store data. The processor and the memory may be separately disposed, or may be integrated together.

In a possible design, the communication apparatus 900 may further include a transceiver 905 and/or an antenna 906. The processor 901 may sometimes also be referred to as a processing unit, and controls the communication apparatus 900. The transceiver 905 may sometimes also be referred to as a transceiver unit, a transceiver machine, a transceiver circuit, a transceiver, or the like, and is configured to implement a transceiver function of the communication apparatus through the antenna 906.

In a possible design, the communication apparatus 900 may further include one or more of the following components: a wireless communication module, an audio module, an interface for external memory, an internal memory, a universal serial bus (universal serial bus, USB) interface, a power management module, an antenna, a speaker, a microphone, an input/output module, a sensor module, a motor, a camera, a display, or the like. It can be understood that in some embodiments, the communication apparatus 900 may include more or fewer components, or some components are integrated, or some components are split. These components may be implemented by hardware, software, or a combination of software and hardware.

The communication apparatus in the foregoing embodiments may be a terminal device, an access network device, or a core network element, may be a circuit, or may be a chip used in a terminal device, an access network device, or a core network element, or another combined component, part, or the like that has the foregoing core network element (access network device). When the communication apparatus is a terminal device (or an access network device), the transceiver module may be a transceiver, and may include an antenna, a radio frequency circuit, and the like. The processing module may be a processor, for example, a CPU. When the communication apparatus is a component having a function of the foregoing core network element, the transceiver module may be a wired line, and the processing module may be a processor. When the communication apparatus is a chip system, the communication apparatus may be an FPGA, a dedicated ASIC, a system on chip (system on chip, SoC), a CPU, a network processor (network processor, NP), a DSP, a microcontroller unit (microcontroller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

An embodiment of this application further provides a communication system. Specifically, the communication system includes a terminal device, an access network device, and a core network element. For example, the communication system includes a terminal device, a core network element, and an access network device that are configured to implement related functions in FIG. 5. Alternatively, the communication system includes a terminal device, a core network element, and an access network device that are configured to implement related functions in FIG. 7. Alternatively, the communication system includes an access network device and a core network element. For example, the communication system includes a core network element and an access network device that are configured to implement related functions in FIG. 6. The communication system may further include a terminal device. For details, refer to related descriptions in the foregoing method embodiments. Details are not described herein again.

An embodiment of this application further provides a computer-readable storage medium, including instructions. When the instruction are run on a computer, the computer is caused to perform the method performed by the terminal device, the core network element, or the access network device in one or more of FIG. 5 to FIG. 7.

An embodiment of this application further provides a computer program product, including instructions. When the instruction are run on a computer, the computer is caused to perform the method performed by the terminal device, the core network element, or the access network device in one or more of FIG. 5 to FIG. 7.

An embodiment of this application provides a chip system. The chip system includes a processor, may further include a memory, and is configured to implement functions of the terminal device, the access network device, or the core network element in the foregoing methods. The chip system may include a chip, or may include a chip and another discrete device.

To implement the functions of the communication apparatuses in FIG. 8 and FIG. 9, an embodiment of this application further provides a chip, including a processor, configured to support the communication apparatuses in implementing the functions of the terminal device, the access network device, or the core network element in the foregoing method embodiments. In a possible design, the chip is connected to a memory, or the chip includes a memory. The memory is configured to store a computer program or instructions and data that are necessary for the communication apparatuses.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, illustrative logical blocks (illustrative logical blocks) and steps (steps) described with reference to embodiments disclosed in this specification can be implemented by electronic hardware, computer software, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk drive, a ROM, a RAM, a magnetic disk, or an optical disc.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
sending, by a terminal device, first information to a network device or receiving second information from the network device, and starting a first timer; and
when the terminal device determines that the first timer expires, performing one or more of the following:
disconnecting, at an access stratum AS by the terminal device, from the network device; or
entering, by the terminal device, a first state, wherein when in the first state, the terminal device responds only to a paging message or a downlink trigger message, and the downlink trigger message comprises a query message or a select message.

2. The method according to claim 1, wherein that the terminal device determines that the first timer expires comprises:
determining, by the terminal device, that the first timer expires and that no third information is received from the network device.

3. The method according to claim 1, wherein the method further comprises:
sending, by the terminal device, a first message to the network device, wherein the first message indicates that a link of the terminal device is abnormal.

4. The method according to any one of claims 1 to 3, wherein the method further comprises:
keeping, by the terminal device, a flag unchanged, wherein the flag identifies an access state of the terminal device.

5. The method according to any one of claims 1 to 4, wherein the method further comprises:
receiving, by the terminal device, first indication information, wherein the first indication information is used to determine a timing duration of the first timer.

6. The method according to claim 5, wherein
the first indication information indicates first time information, and the first time information indicates the timing duration of the first timer; or
the first indication information indicates that the timing duration of the first timer is determined based on a timing duration of a second timer, and the second timer is used for random access.

7. The method according to claim 6, wherein that the first indication information indicates the first time information comprises:
the first indication information comprises the first time information;
the first indication information comprises an index of the first time information; or
the first indication information comprises identifier information of a first service, wherein the first service is associated with the first time information.

8. The method according to claim 6 or 7, wherein the first indication information is carried in the paging message, and the method further comprises:
receiving, by the terminal device, second indication information, wherein the second indication information indicates second time information, the second time information is used to determine the timing duration of the first timer, the second indication information is carried in an acknowledgment message, and the acknowledgment message indicates the terminal device to send data, or is used to confirm that the terminal device successfully sends data.

9. The method according to claim 8, wherein the timing duration of the first timer is determined based on the second time information.

10. The method according to claim 8, wherein that the second indication information indicates the second time information comprises:
the second indication information comprises the second time information;
the second indication information comprises an index of the second time information; or
the second indication information comprises identifier information of a second service, wherein the second service is associated with the second time information.

11. A communication method, comprising:
sending, by a terminal device, first information to a network device or receiving second information from the network device, and starting a first timer; and
if the terminal device receives third information from the network device before the first timer expires, not performing one or more of the following:
performing, by the terminal device, random access or performing reselection and random access; or
responding, by the terminal device, to a downlink trigger message, wherein the downlink trigger message is used to select or trigger the terminal device to access a network or send data, and/or is used to trigger one or more access resources.

12. A communication method, comprising:
determining, by an access network device, first indication information, wherein the first indication information is used to determine a timing duration of a first timer, and the first timer is used by a terminal device to determine whether a link is abnormal; and
sending, by the access network device, the first indication information to the terminal device.

13. The method according to claim 12, wherein
the first indication information indicates first time information, and the first time information indicates the timing duration of the first timer; or
the first indication information indicates that the timing duration of the first timer is determined based on a timing duration of a second timer, and the second timer is used for random access.

14. The method according to claim 13, wherein that the first indication information indicates the first time information comprises:
the first indication information comprises the first time information;
the first indication information comprises an index of the first time information; or
the first indication information comprises identifier information of a first service, wherein the first service is associated with the first time information.

15. The method according to any one of claims 12 to 14, wherein the method further comprises:
sending, by the access network device, second indication information to the terminal device, wherein the second indication information indicates second time information, the second time information is used to determine the timing duration of the first timer, the second indication information is carried in an acknowledgment message, and the acknowledgment message indicates the terminal device to send data, or is used to confirm that the terminal device successfully sends data.

16. The method according to claim 15, wherein that the second indication information indicates the second time information comprises:
the second indication information comprises the second time information;
the second indication information comprises an index of the second time information; or
the second indication information comprises identifier information of a second service, wherein the second service is associated with the second time information.

17. The method according to any one of claims 12 to 16, wherein the method further comprises:
sending, by the access network device, fourth information to a core network element, and starting a third timer; and
when the access network device determines that the third timer expires and that no response to the fourth information is received, performing one or more of the following:
releasing, by the access network device, an access stratum AS of the terminal device; or
sending, by the access network device, a second message to the terminal device, wherein the second message is used to trigger a next access time resource.

18. The method according to claim 17, wherein the method further comprises:
receiving, by the access network device, third indication information from the core network element, wherein the third indication information is used to determine a timing duration of the third timer, and/or is used to determine the timing duration of the first timer.

19. The method according to claim 18, wherein the third indication information indicates third time information, and the third time information is used to determine the timing duration of the third timer and/or the timing duration of the first timer.

20. The method according to claim 18 or 19, wherein the method further comprises:
sending, by the access network device, a third message to the terminal device, wherein the third message indicates that the link is abnormal.

21. The method according to any one of claims 18 to 20, wherein the method further comprises:
sending, by the access network device, a fourth message to the core network element, wherein the fourth message indicates that the terminal device is released.

22. A communication method, comprising:
sending, by an access network device, fourth information to a core network element, and starting a third timer; and
when the access network device determines that the third timer expires and that no response to the fourth information is received, performing one or more of the following:
releasing, by the access network device, an access stratum AS of a terminal device; or
sending, by the access network device, a second message to a terminal device, wherein the second message is used to trigger a next access time resource.

23. The method according to claim 22, wherein the method further comprises:
receiving, by the access network device, third indication information from the core network element, wherein the third indication information is used to determine a timing duration of the third timer, and/or the third indication information is used to determine a timing duration of a first timer, and the first timer is used by the terminal device to determine whether a link is abnormal.

24. The method according to claim 22 or 23, wherein the method further comprises:
sending, by the access network device, a third message to the terminal device, wherein the third message indicates that the link is abnormal.

25. The method according to any one of claims 22 to 24, wherein the method further comprises:
sending, by the access network device, a fourth message to the core network element, wherein the fourth message indicates that the terminal device is released.

26. A communication method, comprising:
determining, by a core network element, third indication information, wherein the third indication information is used to determine a timing duration of a third timer and/or a timing duration of a first timer, the first timer is used by a terminal device to determine whether a link is abnormal, and the third timer is used by an access network device to determine whether to release the terminal device; and
sending, by the core network element, the third indication information to the access network device.

27. The method according to claim 26, wherein the third indication information indicates third time information, and the third time information is used to determine the timing duration of the third timer and/or the timing duration of the first timer.

28. A communication apparatus, comprising:
a transceiver module, configured to send first information to a network device or receive second information from the network device; and
a processing module, configured to: start a first timer; and when determining that the first timer expires, perform one or more of the following:
disconnecting, at an access stratum AS, from the network device; or
entering a first state, wherein when in the first state, the communication apparatus responds only to a paging message or a downlink trigger message, and the downlink trigger message comprises a query message or a select message.

29. The apparatus according to claim 28, wherein determining that the first timer expires comprises:
determining, by the terminal device, that the first timer expires and that no third information is received from the network device.

30. The apparatus according to claim 28, wherein the transceiver module is further configured to:
send a first message to the network device, wherein the first message indicates that a link of the communication apparatus is abnormal.

31. The apparatus according to any one of claims 28 to 30, wherein the transceiver module is further configured to:
keep a flag unchanged, wherein the flag identifies an access state of the communication apparatus.

32. The apparatus according to any one of claims 28 to 31, wherein the transceiver module is further configured to:
receive first indication information, wherein the first indication information is used to determine a timing duration of the first timer.

33. The apparatus according to claim 32, wherein
the first indication information indicates first time information, and the first time information indicates the timing duration of the first timer; or
the first indication information indicates that the timing duration of the first timer is determined based on a timing duration of a second timer, and the second timer is used for random access.

34. The apparatus according to claim 33, wherein that the first indication information indicates the first time information comprises:
the first indication information comprises the first time information;
the first indication information comprises an index of the first time information; or
the first indication information comprises identifier information of a first service, wherein the first service is associated with the first time information.

35. The apparatus according to claim 33 or 34, wherein the first indication information is carried in the paging message, and the transceiver module is further configured to:
receive second indication information, wherein the second indication information indicates second time information, the second time information is used to determine the timing duration of the first timer, the second indication information is carried in an acknowledgment message, and the acknowledgment message indicates the communication apparatus to send data, or is used to confirm that the communication apparatus successfully sends data.

36. The apparatus according to claim 35, wherein the timing duration of the first timer is determined based on the second time information.

37. The apparatus according to claim 36, wherein that the second indication information indicates the second time information comprises:
the second indication information comprises the second time information;
the second indication information comprises an index of the second time information; or
the second indication information comprises identifier information of a second service, wherein the second service is associated with the second time information.

38. A communication apparatus, comprising:
a transceiver module, configured to send first information to a network device or receive second information from the network device, and start a first timer; and
a processing module, configured to: when determining that third information is received from the network device before the first timer expires, not perform one or more of the following:
performing random access or not performing reselection and random access; or
entering a first state, wherein when in the first state, the terminal device responds only to a paging message or a downlink trigger message, and the downlink trigger message is used to select or trigger the terminal device to access a network or send data, and/or is used to trigger one or more access resources.

39. A communication apparatus, comprising:
a processing module, configured to determine first indication information, wherein the first indication information is used to determine a timing duration of a first timer, and the first timer is used by a terminal device to determine whether a link is abnormal; and
a transceiver module, configured to send the first indication information to the terminal device.

40. The apparatus according to claim 39, wherein
the first indication information indicates first time information, and the first time information indicates the timing duration of the first timer; or
the first indication information indicates that the timing duration of the first timer is determined based on a timing duration of a second timer, and the second timer is used for random access.

41. The apparatus according to claim 40, wherein that the first indication information indicates the first time information comprises:
the first indication information comprises the first time information;
the first indication information comprises an index of the first time information; or
the first indication information comprises identifier information of a first service, wherein the first service is associated with the first time information.

42. The apparatus according to any one of claims 39 to 41, wherein the transceiver module is further configured to:
send second indication information to the terminal device, wherein the second indication information indicates second time information, the second time information is used to determine the timing duration of the first timer, the second indication information is carried in an acknowledgment message, and the acknowledgment message indicates the terminal device to send data, or is used to confirm that the terminal device successfully sends data.

43. The apparatus according to claim 42, wherein that the second indication information indicates the second time information comprises:
the second indication information comprises the second time information;
the second indication information comprises an index of the second time information; or
the second indication information comprises identifier information of a second service, wherein the second service is associated with the second time information.

44. The apparatus according to any one of claims 39 to 43, wherein
the transceiver module is further configured to: send fourth information to a core network element, and start a third timer; and
the processing module is further configured to: when determining that the third timer expires and that no response to the fourth information is received, perform one or more of the following:
releasing an access stratum AS of the terminal device; or
sending a second message to the terminal device, wherein the second message is used to trigger a next access time resource.

45. The apparatus according to claim 44, wherein the transceiver module is further configured to:
receive third indication information from the core network element, wherein the third indication information is used to determine a timing duration of the third timer, and/or is used to determine the timing duration of the first timer.

46. The apparatus according to claim 45, wherein the third indication information indicates third time information, and the third time information is used to determine the timing duration of the third timer and/or the timing duration of the first timer.

47. The apparatus according to claim 45 or 46, wherein the transceiver module is further configured to:
send a third message to the terminal device, wherein the third message indicates that the link is abnormal.

48. The apparatus according to any one of claims 45 to 47, wherein the transceiver module is further configured to:
send a fourth message to the core network element, wherein the fourth message indicates that the terminal device is released.

49. A communication apparatus, comprising:
a transceiver module, configured to send fourth information to a core network element; and
a processing module, configured to: start a third timer; and when determining that the third timer expires and that no response to the fourth information is received, perform one or more of the following:
releasing an access stratum AS of a terminal device; or
sending a second message to a terminal device, wherein the second message is used to trigger a next access time resource.

50. The apparatus according to claim 49, wherein the transceiver module is further configured to:
receive third indication information from the core network element, wherein the third indication information is used to determine a timing duration of the third timer, and/or the third indication information is used to determine a timing duration of a first timer, and the first timer is used by the terminal device to determine whether a link is abnormal.

51. The apparatus according to claim 49 or 50, wherein the transceiver module is further configured to:
send a third message to the terminal device, wherein the third message indicates that the link is abnormal.

52. The apparatus according to any one of claims 49 to 51, wherein the transceiver module is further configured to:
send a fourth message to the core network element, wherein the fourth message indicates that the terminal device is released.

53. A communication apparatus, comprising:
a processing module, configured to determine third indication information, wherein the third indication information is used to determine a timing duration of a third timer and/or a timing duration of a first timer, the first timer is used by a terminal device to determine whether a link is abnormal, and the third timer is used by an access network device to determine whether to release the terminal device; and
a transceiver module, configured to send the third indication information to the access network device.

54. The apparatus according to claim 53, wherein the third indication information indicates third time information, and the third time information is used to determine the timing duration of the third timer and/or the timing duration of the first timer.

55. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 10, or cause the communication apparatus to perform the method according to claim 11, or cause the communication apparatus to perform the method according to any one of claims 12 to 21, or cause the communication apparatus to perform the method according to any one of claims 22 to 25, or cause the communication apparatus to perform the method according to either of claims 26 and 27.

56. A computer-readable storage medium, wherein the computer-readable storage medium is configured to store a computer program, and when the computer program is run on a computer, the computer is caused to perform the method according to any one of claims 1 to 10, or the computer is caused to perform the method according to claim 11, or the computer is caused to perform the method according to any one of claims 12 to 21, or the computer is caused to perform the method according to any one of claims 22 to 25, or the computer is caused to perform the method according to either of claims 26 and 27.

57. A computer program product, wherein the computer program product comprises a computer program, and when the computer program is run on a computer, the computer is caused to perform the method according to any one of claims 1 to 10, or the computer is caused to perform the method according to claim 11, or the computer is caused to perform the method according to any one of claims 12 to 21, or the computer is caused to perform the method according to any one of claims 22 to 25, or the computer is caused to perform the method according to either of claims 26 and 27.

58. A chip system, wherein the chip system comprises:
a processor and an interface, wherein the processor is configured to invoke instructions from the interface and run the instructions, and when the processor executes the instructions, the method according to any one of claims 1 to 10 is implemented, or the method according to claim 11 is implemented, or the method according to any one of claims 12 to 21 is implemented, or the computer is caused to perform the method according to any one of claims 22 to 25, or the computer is caused to perform the method according to either of claims 26 and 27.
